# FASCICULE DE BREVET EUROPEEN

(11) **EP 3 218 726 B1**
(45) Date de publication et mention de la délivrance du brevet: **10.03.2021**
(21) Numéro de dépôt: 15851918.1
(22) Date de dépôt: 13.10.2015
(51) Int. Cl.: G01P 5/24, G01S 11/02

(54) **DISPOSITIF DE MESURE DE GRANDE PRÉCISION DE LA VITESSE D'UN MOBILE PAR RAPPORT À UN FLUIDE L'ENVIRONNANT**
VORRICHTUNG ZUR HOCHGENAUEN MESSUNG DER GESCHWINDIGKEIT EINES SICH BEWEGENDEN FAHRZEUGS IN BEZUG AUF EINE UMGEBENDE FLÜSSIGKEIT
DEVICE FOR THE HIGH-PRECISION MEASUREMENT OF THE SPEED OF A MOVING VEHICLE IN RELATION TO A SURROUNDING FLUID

(30) Priorité: 21.10.2014 FR 1402359
(43) Date de publication de la demande: 20.09.2017
(73) Titulaire: AER, 94550 Chevilly-Larue (FR)
(72) Inventeur: SCHEGERIN, Robert, 94550 Chevilly-Larue (FR); LE BELLEC, Gwezheng, 94550 Chevilly-Larue (FR)
(74) Mandataire: Touroude, Magali Linda
(86) Numéro de dépôt international: PCT/FR2015/000194
(87) Numéro de publication internationale: WO 2016/062929

(56) Documents cités:
- WO-A1-2012/150385
- US-A- 2 699 677
- US-A1- 2012 173 191

## Description

La présente invention concerne un dispositif de mesure de grande précision, en temps réel, de la vitesse, notamment anémométrique, d'un mobile, notamment d'un aéronef, par rapport à un fluide, notamment à une masse d'air, l'environnant indépendamment des conditions opérationnelles et/ou des conditions atmosphériques, notamment indépendamment des contraintes aérodynamiques et/ou mécaniques et/ou thermiques subies par l'aéronef dans la masse d'air.

Elle concerne particulièrement un vélocimètre acoustique permettant d'améliorer la précision et la fiabilité de mesure de la vitesse relative d'un mobile par rapport à un fluide l'environnant.

Elle concerne plus particulièrement un vélocimètre acoustique permettant de mesurer la vitesse anémométrique d'un aéronef par rapport à la masse d'air l'environnant.

L'invention se situe dans le domaine des capteurs de vitesse d'un mobile, notamment d'un véhicule submersible ou terrestre ou aérien, fonctionnant dans les conditions opérationnelles et/ou atmosphériques sévères.

Elle se situe plus principalement dans le domaine de capteur de vitesse anémométrique d'un aéronef fonctionnant dans des conditions atmosphériques sévères.

L'invention se rapporte plus particulièrement, mais pas exclusivement, à la mesure fiable de la vitesse anémométrique d'un mobile par rapport à une masse d'air ambiante l'environnant, notamment dans les conditions atmosphériques sévères (par exemple neige, forte pluie, foudre, grêle, contraintes aérodynamiques, etc.).

Il existe plusieurs dispositifs de mesure de vitesse d'un aéronef par rapport à une masse d'air ambiante environnant ledit aéronef, en temps réel. Malheureusement, ces dispositifs sont sensibles aux conditions opérationnelles et/ou atmosphériques exceptionnellement sévères.

Pour une bonne navigabilité de l'aéronef, notamment sa sécurité et sa fiabilité, la vitesse apparait comme un paramètre aérodynamique fondamental permettant à l'aéronef d'évoluer de façon stable dans l'atmosphère. En effet, compte tenu de la faible densité de l'air en altitude, l'avion décroche à une vitesse relativement élevée alors qu'une survitesse conduit à la destruction de l'appareil. Ainsi, une fausse indication de vitesse peut générer des accidents graves notamment en cas de fausses informations simultanées de plusieurs sondes de vitesse. De ce fait, plusieurs accidents ou incidents graves sont dus de façon certaine à la mauvaise indication des valeurs de vitesse.

La sonde Pitot est l'un des moyens actuellement utilisés pour déterminer de façon précise la vitesse d'un aéronef par rapport à la masse d'air environnant ledit aéronef. Cette sonde est simple et précise, mais est très sensible aux conditions atmosphériques très sévères, notamment aux fortes conditions givrantes et aux fortes pluies.

Il est connu de l'état de la technique des systèmes de mesure de la vitesse anémométrique utilisant un émetteur d'ondes électromagnétiques comme le laser et un récepteur associé au dit émetteur. Malheureusement, en altitude, l'atmosphère est souvent complexe et l'utilisation de telles ondes peut provoquer des interférences avec les fréquences d'émission des tours de contrôle communicant avec l'aéronef. Ce système de vélocimétrie n'est donc pas adapté pour mesurer la vitesse anémométrique d'un aéronef pendant un vol.

Il est également connu de l'état de la technique des systèmes basés sur l'effet doppler. Ces systèmes permettent de mesurer la vitesse de l'aéronef par rapport à un point fixe dans l'espace et non pas par rapport à l'air. Malheureusement, ces systèmes sont très sensibles aux contraintes aérodynamiques et/ou mécaniques et/ou thermiques subies par l'aéronef et n'est donc pas adapté pour mesurer la vitesse anémométrique d'un aéronef pendant un vol.

De l'état de la technique est connu des systèmes de mesure de la vitesse anémométrique d'un mobile par rapport à une masse d'air l'environnant basés sur la mesure de temps de propagation, aller et retour d'une onde acoustique, généralement des ultrasons, se propageant entre deux points placés dans l'air ambiant. Malheureusement, ce système ne peut pas être utilisé pour déterminer la vitesse anémométrique d'un aéronef par rapport à une masse d'air l'environnant tout en étant insensible aux conditions atmosphériques sévères et aux différentes contraintes aérodynamiques et/ou mécaniques et/ou thermiques subies par l'aéronef. En effet, le retour ou l'aller se fait contre la direction du vecteur vitesse de l'air ambiant, et si la vitesse est proche de la vitesse du son, la distance de cheminement de l'onde acoustique du retour ou de l'aller est très importante. De plus, la diminution de la puissance du signal étant sensiblement exponentielle avec la distance, l'onde finit par s'évanouir ou disparaitre avant d'atteindre le récepteur. Ce système est inapplicable pour mesurer la vitesse anémométrique de l'aéronef dans tous les domaines de vol avion : subsonique et/ou transsonique et/ou supersonique.

De la publication US 3 222 926 est connu un système ultrason utilisant au moins deux récepteurs et au moins un émetteur acoustique permettant de mesurer la vitesse d'un mobile par rapport à une masse d'air ambiante et éventuellement l'angle de lacet et l'angle d'attaque, indépendamment des conditions atmosphériques. Malheureusement, ce système est trop encombrant et n'est pas précis, car les capteurs acoustiques sont placés dans des zones où la couche limite et/ou les perturbations aérodynamiques sont importantes, notamment au niveau des hélices et/ou des moteurs et/ou des ailes, mais particulièrement au niveau du bord d'attaque. De plus, dans ce système, l'air est considéré comme homogène et les distances séparant les capteurs sont fixes et constantes. De plus, les légères déformations de l'aéronef ne sont pas prises en compte, ce qui induit une imprécision sur la mesure de la vitesse anémométrique. Ce système n'est donc pas adapté pour mesurer la vitesse anémométrique d'un aéronef par rapport à la masse d'air l'environnant tout en étant insensible aux conditions atmosphériques et aux différentes contraintes aérodynamiques et/ou mécaniques et/ou thermiques subies par l'aéronef dans tous les domaines de vol d'un avion commercial ou militaire ou d'un drone.

De la publication FR 2 948 458 est connu un système de mesure de la vitesse d'un aéronef indépendamment des conditions météorologiques (par exemple la glace, forte pluie, etc.) ledit système comprenant, solidaire à l'avion, deux couples émetteurs-récepteurs ultrasons (E1, R2), (E2, R1), chaque émetteur étant capable d'émettre un signal acoustique et chaque récepteur étant capable de recevoir respectivement un signal acoustique, lesdits couples étant situés à une distance fixe L l'un de l'autre. Ledit système comprend en outre au moins un moyen de calcul permettant de calculer la vitesse de l'aéronef par rapport à la masse d'air l'environnant lorsque l'émetteur E1 se trouve en avant de l'aéronef et le récepteur R2 se trouve à l'arrière de l'aéronef et lorsque l'émetteur E2 se trouve à l'arrière de l'aéronef et le récepteur R1 se trouve à l'avant de l'aéronef. Malheureusement, ce système effectue un aller-retour dont le retour se fait à contre sens du déplacement de la masse d'air environnant l'aéronef, notamment contre le vent, ce qui conduit à la perte totale du signal. Ce système ne permet pas de mesurer la vitesse anémométrique de l'aéronef par rapport à la masse d'air tout en tenant compte des conditions atmosphériques sévères et des différentes contraintes aérodynamiques et/ou mécaniques et/ou thermiques subies par l'aéronef dans tous les domaines de vol d'un avion commercial ou militaire ou d'un drone.

De la publication WO 2012 150385 est connu un dispositif précis et fiable permettant de déterminer la vitesse anémométrique d'un aéronef indépendamment des conditions atmosphériques, ledit dispositif comprenant au moins deux générateurs acoustiques G1 et G2, capables d'émettre respectivement au moins un train d'onde acoustique, fixés respectivement sur la surface de l'aéronef au point CG1 et CG2 respectivement, et deux récepteurs acoustiques C1 et C2, fixés respectivement sur la surface de l'aéronef au point CC1 et CC2 à l'arrière des générateurs acoustiques par rapport au sens de déplacement de la masse d'air environnant l'aéronef et capable de recevoir respectivement un train d'onde émis par les générateurs G1 et G2 respectivement. Malheureusement, dans ce système, les distances séparant les capteurs sont fixes et constantes et les légères déformations de l'aéronef ne sont pas prises en compte, ce qui induit une imprécision sur la mesure de la vitesse anémométrique. De plus, le positionnement des capteurs, qui est un paramètre important dans la mesure et la précision sur la valeur de la vitesse, n'est pas encadré géométriquement de façon à répondre aux critères de précisions imposés par les besoins de navigation. Ce système ne permet donc pas de mesurer avec précision la vitesse anémométrique de l'aéronef par rapport à une masse d'air l'environnant.

L'un des principaux problèmes techniques des systèmes de vélocimétrie précédemment évoqués est en ce que, dans un environnement sévère, notamment les conditions opérationnelles et/ou atmosphériques sévères, les mesures de vitesse sont très peu précises, car la structure du mobile est faiblement élastique et est capable de se déformer légèrement en fonction des conditions opérationnelles et/ou atmosphériques, par exemple les contraintes aérodynamiques et/ou mécaniques et/ou thermiques subies par l'aéronef d'une part, et d'autre part, le déplacement et/ou le fonctionnement de l'aéronef dans la masse d'air génère un bruit perturbant les mesures de vitesse et rendant difficile l'évaluation de façon continue de la précision de mesure de la vitesse à chaque instant. Dans ce dernier cas, les sources de bruit aérodynamiques dans un aéronef sont multiples. Les bruits résultent d'une part des interactions de l'aéronef avec l'écoulement. D'autre part, les fluctuations de pression dans la couche limite turbulente autour de l'aéronef excitent les surfaces, telles que le fuselage. Les bruits aérodynamiques sont des bruits de larges bandes compte tenu de la diversité de structures turbulentes présentes dans l'écoulement; son contrôle actif semble nécessaire pour une bonne précision sur la mesure de la vitesse anémométrique d'un aéronef. Par exemple, le bruit des turboréacteurs est dû à la turbulence du jet en sortie et à la combustion, mais aussi aux bruits de soufflante qui émettent un sifflement caractéristique, particulièrement audible en approche et au sol.

Un autre problème technique principal des systèmes de vélocimétrie précédemment évoqués est en ce que le positionnement géométrique des générateurs et des récepteurs n'est pas encadré par des critères physiques tenant compte des conditions opérationnelles et/ou atmosphériques, notamment d'une part, de la qualité du signal et de la précision des mesures, car il existe un risque d'équivalence des équations mathématiques, et d'autre part, de la nature de l'écoulement (uniforme ou non uniforme) pour prendre en compte les différents phénomènes aérodynamiques.

Un autre problème technique principal des systèmes de vélocimétrie précédemment évoqués est en ce que les différentes déformations de l'aéronef, notamment les phénomènes d'aéroélasticités, particulièrement du fuselage et les éventuels effets de la couche limite, ne sont pas pris en compte dans le calcul de la vitesse. En effet, de façon générale, le fuselage, dont la section a une forme adaptée de façon à réduire la trainée, est une enveloppe structurelle aménagée pour transporter la charge utile de l'avion et pour supporter les autres sous-ensembles de l'aéronef. Le fuselage est généralement circulaire pour les avions pressurisés. Au début du 20ème siècle, tous types d'aéronef confondus, l'utilisation d'alliages à base d'aluminium pour la fabrication du fuselage reste la plus courante, mais les matériaux composites font une percée notable pour les aéronefs de transport de passagers. Malgré les progrès techniques dans l'utilisation des matériaux adéquats pour la fabrication des aéronefs, les matériaux constituant le fuselage, mais également les ailes et l'empennage, tous types d'aéronefs confondus, ont une structure faiblement élastique et capable de se déformer légèrement en fonction des conditions opérationnelles et/ou atmosphériques comme exemple les contraintes aérodynamiques et/ou mécaniques et/ou thermiques subies par l'aéronef. Cette déformation peut entrainer un allongement de la structure de l'aéronef et donc une variation de la distance séparant le générateur et le récepteur acoustique et/ou une variation du trajet des trains d'ondes acoustiques. Dans les documents de l'état de la technique, cette déformation n'est pas prise en compte pour calculer de façon précise, la vitesse anémométrique de l'aéronef.

Il est donc clair que dans les conditions opérationnelles et/ou atmosphériques sévères, la structure de l'aéronef qui est faiblement élastique est capable de se déformer légèrement. Parmi les atmosphères sévères, on peut citer par exemple les variations de température. En effet, les avions civils ou militaires évoluent principales dans la troposphère et/ou la stratosphère. Dans ces couches de l'atmosphère terrestre, la valeur de la température décroit drastiquement en fonction de l'altitude. Dans la mesure où la dilatation d'un matériau est fonction de la température, il s'en suit une variation dimensionnelle de la structure modifiant légèrement les dimensions de l'aéronef de quelques centimètres, allongeant ou diminuant la distance entre le générateur acoustique et le récepteur acoustique ou allongeant ou diminuant le trajet de l'onde acoustique. Aucun des documents de l'état de la technique ne fait référence aux phénomènes d'aéroélasticités liés notamment à la variation de la température pour calculer la vitesse anémométrique d'un aéronef.

De ce fait, il semble nécessaire d'envisager d'autres alternatives aux systèmes de vélocimétries décrites dans l'état de la technique , prenant en compte les conditions atmosphériques sévères et les différentes contraintes aérodynamiques et/ou mécaniques et/ou thermiques subies par l'aéronef, permettant de mesurer et/ou d'améliorer la précision et la fiabilité des mesures de la vitesse de l'aéronef par rapport à une masse d'air l'environnant tout en résistant auxdites contraintes, dans tous les domaines de vol, notamment subsonique et/ou transsonique et/ou supersonique.

La présente invention vise donc à fournir un dispositif de mesure de grande précision, en temps réel, de la vitesse anémométrique d'un aéronef par rapport à une masse d'air ambiante l'environnant remédiant aux inconvénients et/ou problèmes techniques précédemment évoqués, notamment en améliorant la précision sur la mesure de ladite vitesse en tenant compte des différentes déformations subies par l'aéronef, du bruit généré par l'aéronef lors de son déplacement dans la masse d'air et de la nature de l'écoulement autour de l'aéronef.

Dans la description qui suit, les termes listés ci-après auront la définition suivante:
- Vitesse anémométrique : vitesse de l'avion par rapport à l'air environnant.
- Condition atmosphérique : c'est la situation de l'atmosphère en un lieu donnée, à une certaine date.
- Conditions atmosphériques sévères : situation comportant des températures très basses ou très élevées et/ou comprenant une grande quantité d'eau éventuellement surfondue et/ou une grande quantité de cristaux et/ou d'aérosols.
- Conditions opérationnelles : toute condition rencontrée en vol normal d'un aéronef.
- Conditions opérationnelles sévères : situation extrême du domaine de vol.
- Kilohertz (kHz), Gigahertz (GHz) : ce sont des multiples d'hertz. L'hertz est l'unité de mesure de fréquence. 1kHz = 1000 Hz et 1GHz = 1000 kHz.
- Grande précision : aptitude à distinguer des valeurs et/ou des mesures très voisines avec un plus grand nombre de chiffres significatifs de l'ordre du millième.
- Temps réel : temps plus court que le dixième de seconde.
- Subsonique : lorsque le nombre de Mach est inférieur au Mach critique qui correspond à l'apparition d'une onde de choc.
- Transsonique : lorsque la vitesse locale devient égale à la célérité du son ; le nombre de

Mach avion correspondant, inférieur à 1, s'appelle le Mach critique.
- Supersonique : lorsque la vitesse avion est supérieure à la vitesse du son
- Couche limite : zone d'interface entre un corps et le fluide environnant lors d'un mouvement relatif entre les deux, dépendant principalement de la viscosité du fluide et sa vitesse relative.
- Les contraintes aérodynamiques ou charges aérodynamiques : c'est le tenseur de force appliqué par l'air sur l'avion.
- Les contraintes mécaniques : ce sont les contraintes existantes à l'intérieur des matériaux dues à des efforts appliqués sur la structure.
- Les contraintes thermiques : ce sont les contraintes existantes à l'intérieur des matériaux dues à des variations de température.
- Un moyen actif et automatique : moyen automatique capable de piloter une action en temps réel.
- Bruit ambiant : toutes sortes de bruit ambiant autour de l'aéronef sauf le bruit émit par le générateur d'ondes acoustiques.
- Amont : partie voyant le courant d'air en premier
- Aval : partie voyant le courant d'air en dernier
- Infini amont : endroit placé très en avant de l'aéronef, là où l'écoulement relatif n'est pas modifié par la présence de l'aéronef.
- MEMS : Micro-Electro-Mechanical Systems ou système microélectromécanique ou microsystème électromécanique, est un microsystème comprenant un ou plusieurs éléments mécaniques, utilisant l'électricité comme source d'énergie, en vue de réaliser une fonction de capteur et/ou d'actionneur, avec au moins une structure présentant des dimensions micrométriques, la fonction du système étant en partie assurée par la forme de cette structure.
- CMUT (capacitive MUT) : Ce sont des transducteurs qui utilisent la force électrostatique dans les dispositifs à face parallèle. Ces transducteurs ont besoin d'une tension de polarisation continue et sont fortement non-linéaires.
- PMUT (piezoelectric MUT) : Ce sont des transducteurs qui utilisent de petits éléments piézo et travaillent le plus souvent en mode flexion.

L'invention a pour objet un dispositif de mesure de grande précision, en temps réel, de la vitesse anémométrique VA d'un aéronef par rapport à une masse d'air ambiante MA environnant ledit aéronef et tenant compte des conditions opérationnelles et/ou atmosphériques, ladite masse d'air ambiante MA ayant un sens de déplacement par rapport à l'aéronef représenté par un vecteur W allant de l'amont vers l'aval, ledit aéronef étant capable d'évoluer dans un domaine de vitesse subsonique et/ou transsonique et/ou supersonique, et ayant au moins un fuselage, au moins une couche limite CL environnant ledit aéronef laquelle a une épaisseur définie par un angle ALFA, ce dit angle ALFA étant défini entre la surface externe de l'aéronef et une surface où l'écoulement est proche de l'écoulement relatif à l'infini amont, ledit aéronef comprenant une structure faiblement élastique capable de se déformer légèrement en fonction des conditions opérationnelles et/ou atmosphériques comme par exemple en fonction des contraintes aérodynamiques et/ou mécaniques et/ou thermiques subies par ledit aéronef, ledit aéronef étant capable de générer un bruit B lors de son déplacement et/ou de son fonctionnement dans la masse d'air ambiante MA, ledit aéronef ayant un axe longitudinal OX, un axe latéral OY, un axe vertical OZ, constituant un repère orthonormé OXYZ, et comprenant :
- au moins deux générateurs d'ondes acoustiques GA1 et GA2 capables d'émettre chacun au moins un train d'onde acoustiques, lesdits générateurs GA1 et GA2 étant fixés sur la structure dudit aéronef respectivement à une position G1 et G2 dans le repère OXYZ en suivant les légères déformations de ladite structure dudit l'aéronef, et
- au moins deux récepteurs d'ondes acoustiques RA1 et RA2 capables de recevoir chacun au moins un train d'onde émis par les générateurs d'ondes acoustiques GA1 et/ou GA2, lesdits récepteurs RA1 et RA2 étant fixés sur la structure dudit aéronef respectivement à une position R1 et R2 dans le repère OXYZ en suivant les légères déformations de ladite structure dudit aéronef, le récepteur RA1 étant situé à une distance D1 du générateur GA1 sur l'axe OX et à une distance HI du générateur GA1 sur l'axe OZ, et le récepteur RA2 étant situé à une distance D2 du générateur GA2 sur l'axe OX et à une distance H2 du générateur GA2 sur l'axe OZ, les dits récepteurs RA1 et RA2 étant en outre situés respectivement en aval des générateurs GA1 et GA2,
caractérisé en ce que ledit dispositif comprend :
- au moins un moyen MC de mesure et de calcul, en temps réel, actif et automatique, de la vitesse anémométrique VA avec une précision absolue PAVA et une précision relative PRVA exprimée en pour cent telle que PRVA=100xPAVANA, ledit moyen MC comprenant simultanément :
   ∘ au moins un moyen MC1 de mesure du temps T1 de parcours du train d'onde entre le générateur GA1 et le récepteur RA1 et du temps T2 de parcours du train d'onde entre le générateur GA2 et le récepteur RA2, en suivant les légères déformations de la structure de l'aéronef, et
   ∘ au moins un moyen MC2 de mesure et/ou de calcul des positions G1, G2, R1, R2 et des distances G1R1 et G2R2 correspondant respectivement à la distance entre le générateur G1 et le récepteur R1 et à la distance entre le générateur G2 et le récepteur R2, en suivant les légères déformations de la structure de l'aéronef, et
   ∘ au moins un moyen de calcul MC3 de la vitesse anémométrique VA et de la vitesse du son VS en fonction de T1, T2, G1, G2, R1, R2 ou en fonction de T1, T2, G1R1, G2R2, en suivant les légères déformations de la structure de l'aéronef,
- et au moins un moyen ME de mesure et/ou de calcul, actif et automatique, de correction de la valeur de la vitesse anémométrique VA et éventuellement de la valeur de la vitesse du son VS en améliorant la précision absolue PAVA et/ou la précision relative PRVA exprimée en pour cent telle que PRVA=100xPAVANA, en fonction des conditions opérationnelles comme le bruit et/ou les contraintes aérodynamiques et/ou mécaniques et/ou thermiques subies par ledit aéronef.
lesdits moyens MC et ME étant en outre corrélés pour que chaque valeur de T1, T2, G1, G2, R1, R2 et/ou de T1, T2, G1R1, G2R2 mesurée corresponde à une et une seule valeur de VA, de PAVA et de PRVA.

Avantageusement, le dispositif selon l'invention comprend en outre au moins un générateur d'onde électromagnétique GE capable d'émettre un train d'onde électromagnétiques, ledit train d'onde ayant une fréquence adaptée à la réglementation aérienne et les performances requises, ladite fréquence étant comprise entre 1 GHz et 20 GHz de préférence, et au moins un récepteur d'ondes électromagnétiques RE capable de recevoir ledit train d'onde électromagnétique émis par ledit générateur GE, ledit générateur GE et récepteur RE étant fixés sur la structure dudit aéronef à une position E1 et E2 respectivement, en suivant les légères déformations de la structure dudit aéronef, ledit récepteur RE étant situé à une distance GERE du générateur GE de façon à mesurer la déformation relative de la structure dudit aéronef en mesurant en temps réel le temps de parcours de l'onde électromagnétique, et ceci indépendamment de la vitesse avion.

Avantageusement, le moyen ME comprend au moins un moyen ME1 de mesure et/ou de calcul et de régulation de la puissance PA1 et PA2 des trains d'ondes émis respectivement par lesdits générateurs acoustiques GA1 et GA2, ledit moyen ME1 mesurant en outre la puissance PB du bruit B générée dans les conditions opérationnelles et/ou par les contraintes aérodynamiques et/ou mécaniques et/ou thermiques subies par l'aéronef dans la masse d'air ambiant MA, ledit moyen ME1 permettant en outre un pilotage actif de la puissance PA1 et/ou PA2 en fonction de la puissance PB du bruit B de façon à ce que le rapport PA1/PB et/ou PA2/PB soit toujours supérieur à une valeur prédéterminée Pd dépendant des conditions opérationnelles et/ou par les contraintes aérodynamiques et/ou mécaniques et/ou thermiques, de préférence supérieure à 0,7 ou à 1,2.

Avantageusement, lorsque la puissance PB acoustique du bruit B est inférieure à une valeur prédéterminée PBm (PB < P Bm) dépendant des conditions opérationnelles et/ou par les contraintes aérodynamiques et/ou mécaniques et/ou thermiques, par exemple 60 décibels, par exemple lorsque l'aéronef est à l'arrêt, alors la puissance émise par le générateur GA1 et/ou le générateur GA2 est inférieure ou égale à une valeur prédéterminée PGm par exemple 110 décibels, et lorsque la puissance PB du bruit B est supérieure à la valeur prédéterminée PBm (PB > PBm) la puissance acoustique émise par le générateur GA1 et/ou le générateur GA2 est égale à une valeur supérieure à ladite valeur prédéterminée PGm, par exemple 160 décibels, et caractérisé en ce que la puissance PB du bruit B est mesurée en un endroit où la puissance reçue des ondes acoustiques émises par le générateur GA1 et/ou GA2 est faible et/ou la puissance du bruit B est mesurée en un instant où la puissance des ondes émises par le générateur GA1 et/ou GA2 est faible ou nulle.

Avantageusement, le moyen ME comprend en outre, au moins, un moyen ME2 de mesure et de calcul de la fréquence FA1 et FA2 et/ou de l'impédance IA1 et IA2 des trains d'ondes acoustiques émis respectivement par les générateurs acoustiques GA1 et GA2 et de la fréquence FB et/ou de l'impédance IB du bruit B générée dans les conditions opérationnelles et/ou par les contraintes aérodynamiques et/ou mécaniques subies par l'aéronef dans la masse d'air ambiant MA, ledit moyen ME2 permettant en outre un pilotage actif de la fréquence FA1 et/ou FA2 en fonction de la fréquence FB du bruit B de façon à ce que le rapport FA1/FB et/ou FA2/FB soit toujours supérieur à une valeur prédéterminée Fd, et/ou ledit moyen permettant en outre un pilotage de l'impédance IA1 et/ou IA2 en fonction de l'impédance IB du bruit B de façon à ce que le rapport IA1/IB et/ou IA2/IB soit toujours supérieur à une valeur prédéterminée Id.

Avantageusement, le moyen ME comprend en outre, au moins, un moyen ME3 de mesure et de calcul des écarts algébriques des positions PAG1 et PAG2 des générateurs GA1 et GA2 respectivement et/ou de l'écart algébrique des positions PAR1 et PAR2 des récepteurs RA1 et RA2 respectivement et/ou des écarts algébriques PAG1R1 et PAG2R2 des distances G1R1 et G2R2 respectivement, en fonction des conditions opérationnelles et/ou en fonction des contraintes aérodynamiques et/ou mécaniques subies par ledit aéronef et caractérisé en ce que le moyen ME3 de mesure et de calcul calcule en outre, à partir de la vitesse VS du son, en utilisant les lois de correspondance tabulée reliant la vitesse du son et la température ambiante, une température TA de la masse d'air ambiant, puis en utilisant les lois de dilatations des matériaux et de la géométrie de l'aéronef, le moyen ME3 calcule les écarts PAG1R1 de la distance G1R1 et PAG2R2 de la distance G2R2 en fonction des conditions opérationnelles et/ou en fonction des contraintes aérodynamiques et/ou mécaniques subies par ledit aéronef, caractérisé en ce que le moyen ME3 de mesure et de calcul calcule en outre, à partir de la vitesse anémométrique VA et/ou de la pression atmosphérique, un écart algébrique PAP pour tenir compte de l'allongement de l'aéronef en fonction des forces de traînée appliquées sur les parties arrières de l'aéronef afin de déduire les écarts algébriques PAG1R1 de la distance G1R1 et PAG2R2 de la distance G2R2 en fonction des conditions opérationnelles et/ou en fonction des contraintes aérodynamiques et/ou mécaniques subies par ledit aéronef.

Avantageusement, ledit dispositif comprend en outre un moyen ME4 de mesure et de calcul du temps TEM de parcours de l'onde électromagnétique entre le générateur GE et le récepteur RE et la distance GERE entre le générateur GE et le récepteur RE en suivant les légères déformations de la structure de l'aéronef de façon à obtenir l'écart algébrique PAGERE de la distance GERE et d'en déduire la correction algébrique PAG1R1 de la distance G1R1 et d'en déduire également la correction algébrique PAG2R2 de la distance G2R2 en fonction des conditions opérationnelles et/ou en fonction des contraintes aérodynamiques et/ou mécaniques subies par ledit aéronef.

Avantageusement, les récepteurs RA1 et RA2 et/ou les générateurs GA1 et GA2 ont une surface d'au moins 16 millimètres carrés de façon à ce que, des déformations structurales subies par l'aéronef, dans les conditions opérationnelles et/ou sous les effets des contraintes aérodynamiques et/ou mécaniques, soient négligeables et n'empêchent pas les récepteurs RA1 et RA2 de recevoir les trains d'ondes émis par le générateur GA1 et/ou GA2 et caractérisé en ce qu'au moins un des générateurs acoustiques et/ou au moins un des récepteurs acoustiques soit placé en un point où les effets de déformations subis par l'aéronef sont sensiblement négligeables de façon à mesurer et calculer avec précision les distances séparant les autres générateurs acoustiques aux autres récepteurs acoustiques, et/ou de mesurer avec précision les positions des autres générateurs acoustiques et/ou autres récepteurs acoustiques.

Avantageusement, le dispositif selon l'invention comprend au moins deux générateurs d'ondes électromagnétiques GE1 et GE2 fixés sur la structure dudit aéronef à une position E11 et E12 proche des générateurs GA1 et GA2 respectivement, notamment E11 coïncident avec G1 et/ou E12 coïncident avec G2, et/ou au moins deux récepteurs d'ondes électromagnétiques RE1 et RE2 fixés sur la structure dudit aéronef à une position E21 et E22 proche des récepteurs RA1 et RA2 respectivement, notamment E21 coïncident avec R1 et/ou E22 coïncident avec R2.

Avantageusement, le dispositif selon l'invention comprend un générateur acoustique GA12 comprenant au moins deux générateurs acoustiques GA1, GA2 et/ou un récepteur acoustique RA12 comprenant au moins deux récepteurs acoustiques RA1, RA2.

Avantageusement, le dispositif selon l'invention comprend au moins trois générateurs d'ondes acoustiques et/ou au moins trois récepteurs d'ondes acoustiques et éventuellement un moyen de mesure et de calcul de l'incidence anémométrique à partir des temps de parcours des ondes acoustiques de façon à obtenir une valeur précise de l'incidence et une meilleure précision sur la valeur de la vitesse VA à forte incidence.

L'invention vise également un procédé pour la mise en œuvre du dispositif de mesure selon l'invention dans lequel :
- au moins deux trains d'ondes sont émis respectivement par le générateur acoustique GA1 et GA2 en direction respectivement des récepteurs RA1 et RA2, le récepteur RA1 reçoit au moins une onde émise par GA1 et le récepteur RA2 reçoit au moins une onde émise par GA2,
- à partir du moyen MC1, on mesure les temps de parcours des trains d'ondes T1 et T2,
- à partir du moyen MC2, on mesure les positions G1, G2, R1, R2, et on calcule les distances G1R1 et G2R2,
- à partir du moyen MC3, on calcule, à partir des temps de parcours et des positions ou distances, la valeur de la vitesse avion VA et de la vitesse du son VS en fonction de T1, T2, G1, G2, R1, R2 et/ou en fonction de T1, T2, G1 R1, G2R2,
- à partir du moyen ME1, on mesure la valeur de la puissance PA1 et/ou PA2 des trains d'ondes émis par les générateurs acoustiques et la puissance PB du bruit B ambiant et on calcule le rapport PA1/PB et/ou PA2/PB,
- on vérifie :
   ∘ si le rapport PA1/PB et/ou PA2/PB est supérieur à la valeur Pd prédéterminée en fonction des conditions opérationnelles et/ou en fonction des contraintes aérodynamiques et/ou mécaniques subies par ledit aéronef (1) dans la masse d'air MA, on garde constante la valeur de la puissance PA1 et/ou PA2,
   ∘ si le rapport PA1/PB et/ou PA2/PB est inférieur ou égal à la valeur Pd, on augmente sensiblement la valeur de la puissance PA1 et/ou PA2 de façon à obtenir un rapport PA1/PB et/ou PA2/PB supérieur à Pd,
- on corrige la valeur de la vitesse anémométrique VA et de la vitesse du son VS en fonction de T1, T2, G1, G2, R1, R2 ou en fonction de T1, T2, G1R1, G2R2 pour la valeur de puissance PA1 et/ou PA2,
- on calcule la précision absolue PAVA et/ou la précision relative PRVA exprimée en pour cent tel que PRVA=100xPAVANA, en fonction des conditions opérationnelles et/ou en fonction des contraintes aérodynamiques et/ou mécaniques subies par ledit aéronef (1) pour la valeur de puissance PA1 et/ou PA2.

Avantageusement, le procédé comprend les étapes suivantes :
- à partir du moyen ME2 on mesure la fréquence FA1 et/ou FA2 des trains d'ondes acoustiques émis par les générateurs acoustiques et la fréquence FB du bruit B ambiant, et on calcule le rapport des fréquences FA1/FB et/ou FA2/FB,
- on vérifie :
   ∘ si le rapport FA1/FB et/ou FA2/FB est supérieur Fd, alors on garde constante les valeurs de FA1 et/ou de FA2,
   ∘ si le rapport FA1/FB et/ou FA2/FB est inférieur ou égal à Fd, on augmente sensiblement la valeur de la fréquence FA1 et/ou de FA2 de façon à obtenir un rapport FA1/FB et/ou FA2/FB supérieur à Fd,
- on calcule la nouvelle valeur de la vitesse avion VA et de la vitesse du son VS en fonction de T1, T2, G1, G2, R1, R2 ou en fonction de T1, T2, G1R1, G2R2 pour la valeur de la fréquence FA1 et/ou FA2 ;
- on calcule la précision absolue PAVA et/ou la précision relative PRVA exprimée en pour cent tel que PRVA=100xPAVA/VA, en fonction des conditions opérationnelles et/ou en fonction des contraintes aérodynamiques et/ou mécaniques subies par ledit aéronef (1) pour la valeur de la fréquence FA1 et/ou FA2.

Avantageusement, le procédé comprend les étapes suivantes :
- à partir du moyen ME2 on mesure l'impédance IA1 et/ou IA2 des trains d'ondes acoustiques émis par les générateurs acoustiques et l'impédance IB du bruit B ambiant, et on calcule le rapport des impédances IA1/IB et/ou IA2/IB,
- on vérifie :
   ∘ si le rapport IA1/IB et/ou IA2/IB est supérieur à Id, alors on garde constante les valeurs de IA1 et/ou de IA2,
   ∘ si le rapport IA1/IB et/ou IA2/IB est inférieur ou égal à Id, on augmente sensiblement la valeur de la fréquence IA1 et/ou de IA2 de façon à obtenir un rapport IA1/IB et/ou IA2/IB supérieur à Id respectivement,
- on calcule la nouvelle valeur de la vitesse avion VA et de la vitesse du son VS en fonction de T1, T2, G1, G2, R1, R2 et/ou en fonction de T1, T2, G1R1, G2R2 pour la valeur de la fréquence IA1 et/ou IA2,
- on calcule la précision absolue PAVA et/ou la précision relative PRVA exprimée en pour cent tel que PRVA=100xPAVA/VA, en fonction des conditions opérationnelles et/ou en fonction des contraintes aérodynamiques et/ou mécaniques subies par ledit aéronef (1) pour la valeur de la fréquence IA1 et/ou IA2.

Avantageusement, le procédé comprend les étapes suivantes :
- on mesure les positions G1 et G2 des générateurs GA1 et GA2 et/ou les nouvelles positions R1 et R2 des récepteurs RA1 et RA2 et/ou les nouvelles distances G1R1 et G2R2, en fonction des conditions opérationnelles et/ou en fonction des contraintes aérodynamiques et/ou mécaniques subies par ledit aéronef (1),
- à partir du moyen ME3, on calcule les écarts algébriques PAG1 et PAG2 des positions des générateurs GA1 et GA2 respectivement et/ou les écarts algébriques PAR1 et PAR2 des positions des récepteurs RA1 et RA2 et/ou les écarts algébriques PAG1R1 et PAG2R2 des distances G1R1 et G2R2 respectivement en fonction des conditions opérationnelles et/ou en fonction des contraintes aérodynamiques et/ou mécaniques subies par ledit aéronef (1),
- on calcule la valeur de la vitesse avion VA et de la vitesse du son VS en fonction de T1, T2, G1, G2, R1, R2 ou en fonction de T1, T2, G1R1, G2R2 en intégrant les corrections PAG1, PAG2 et/ou PAR1, PAR2 des positions G1, G2, R1, R2 respectivement et/ou les corrections PAG1R1, PAG2R2, des distances G1R1, G2R2 respectivement,
- on calcule la précision absolue PAVA et/ou la précision relative PRVA exprimée en pour cent tel que PRVA=100xPAVA/VA, en fonction des conditions opérationnelles et/ou en fonction des contraintes aérodynamiques et/ou mécaniques subies par ledit aéronef (1) pour les valeurs de PAG1, PAG2 et/ou PAR1, PAR2 et/ou la PAG1R1, PAG2R2.

Avantageusement, le procédé comprend les étapes suivantes :
- à partir du moyen ME4, pour une condition opérationnelle et/ou des contraintes aérodynamiques et/ou mécaniques subies par ledit aéronef (1) noté C01, on mesure le temps TEM de parcours de l'onde électromagnétique entre le générateur GE et le récepteur RE et on calcule la distance GERE,
- pour une condition opérationnelle et/ou des contraintes aérodynamiques et/ou mécaniques subies par ledit aéronef (1) noté CO2, on mesure un nouveau temps TEM de parcours de l'onde électromagnétique entre le générateur GE et le récepteur RE et on calcule la nouvelle distance NGERE,
- on compare la nouvelle distance NGERE avec la distance GERE et on déduit l'écart algébrique PAGERE = NGERE - GERE de la distance entre GE et RE,
- on calcule la valeur de la vitesse avion VA et de la vitesse du son VS en fonction de T1, T2, G1, G2, R1, R2 et/ou en fonction de T1, T2, G1R1, G2R2 en intégrant la correction PAGERE aux valeurs des distances G1R1, G2R2 pour une condition opérationnelle et/ou des contraintes aérodynamiques et/ou mécaniques subies par ledit aéronef (1) noté CO2, on déduit un écart algébrique PAG1R1 de la distance G1R1 et un écart algébrique PAG2R2 de la distance G2R2,
- après plusieurs itérations on obtient les valeurs précises de VA, VS, en fonction des conditions opérationnelles et/ou en fonction des contraintes aérodynamiques et/ou mécaniques subies par ledit aéronef (1) CO2 pour la valeur PAGERE obtenue,
- on calcule en outre, à partir de la vitesse VS du son, une température TA de la masse d'air ambiante et un écart PATA de ladite température déterminée à partir d'une corrélation entre la vitesse du son et les règles de correspondance entre la vitesse du son et la température,
- on déduit l'écart algébrique PAG1R1 de la distance G1R1 et l'écart algébrique PAG2R2 de la distance G2R2 en fonction des conditions opérationnelles et/ou en fonction des contraintes aérodynamiques et/ou mécaniques subies par ledit aéronef (1),
- on calcule la valeur de la vitesse avion VA et de la vitesse du son VS en fonction de T1, T2, G1, G2, R1, R2 ou en fonction de T1, T2, G1R1, G2R2 pour les écarts algébriques PAG1R1 de la distance G1R1 et PAG2R2 de la distance G2R2,
- on calcule la précision absolue PAVA et/ou la précision relative PRVA exprimée en pour cent telle que PRVA=100xPAVA/VA, en fonction des conditions opérationnelles et/ou en fonction des contraintes aérodynamiques et/ou mécaniques subies par ledit aéronef (1) pour les valeurs l'écart algébrique PAG1R1 de la distance G1R1 et l'écart algébrique PAG2R2 de la distance G2R2 obtenue.

Le dispositif selon l'invention est principalement monté sur un aéronef, car il permet de mesurer directement à partir des temps de parcours des trains d'ondes acoustiques et des positions des capteurs, la vitesse anémométrique de l'aéronef, qui n'est autre que la vitesse de l'aéronef par rapport à l'air ambiant environnant ledit aéronef

Le dispositif selon l'invention peut éventuellement être monté sur tout véhicule terrestre ou submersible. Dans le cas de véhicule submersible, la vitesse mesurée n'est pas une vitesse anémométrique, mais une vitesse submersible qui n'est autre que la vitesse du mobile par rapport au fluide (l'eau ou le liquide) environnant ledit mobile.

Avantageusement, l'aéronef comprend un moyen de mesure de la pression totale par exemple à l'aide d'un tube de Pitot, obtenue à un endroit de l'aéronef, de façon à déduire la pression statique à l'infini amont et/ou obtenir une redondance sur la mesure de la vitesse VA de l'aéronef.

Avantageusement, un des générateurs d'onde acoustique est placé dans l'alignement d'un tube de Pitot, juste derrière celui-ci afin de ne pas créer de tramée supplémentaire et d'émettre l'onde acoustique en dehors de la couche limite.

Avantageusement, un des générateurs d'onde acoustique est placé dans l'alignement d'une antenne de communication électromagnétique, juste derrière celle-ci afin de ne pas créer de traînée supplémentaire et d'émettre l'onde acoustique en dehors de la couche limite.

Avantageusement, l'aéronef comprenant au moins deux dispositifs selon l'invention, et comprenant au moins un moyen de comparaison des valeurs des vitesses avion VA mesurées respectivement par chaque dispositif de façon à s'assurer d'une redondance accrue de la valeur de la vitesse VA pour améliorer la précision et la sécurité de pilotage de l'aéronef.

D'autres caractéristiques et avantages de l'invention, prises seules ou en combinaison, apparaitront à la lecture de la description détaillée qui suit pour la compréhension de laquelle on se reportera aux dessins annexés dans lesquels :
La figure 1 est une représentation schématique d'une vue dans le plan XOZ d'un aéronef intégrant un premier mode de réalisation du dispositif selon l'invention.
La figure 2 est une représentation schématique d'un organigramme de fonctionnement des différents moyens de mesure et de calcul composant le dispositif selon l'invention.
La figure 3 est une représentation schématique d'une vue dans le plan XOZ d'un aéronef intégrant un deuxième mode de réalisation du dispositif selon l'invention.
La figure 4 est une représentation schématique d'une vue dans le plan XOZ d'un aéronef intégrant un troisième mode de réalisation du dispositif selon l'invention.
La figure 5 est une représentation schématique d'une vue dans le plan XOZ d'un aéronef intégrant un quatrième mode de réalisation du dispositif selon l'invention.
La figure 6 est une représentation schématique d'un organigramme de fonctionnement d'un moyen de mesure et de calcul de la vitesse anémométrique de l'aéronef composant le dispositif selon l'invention.

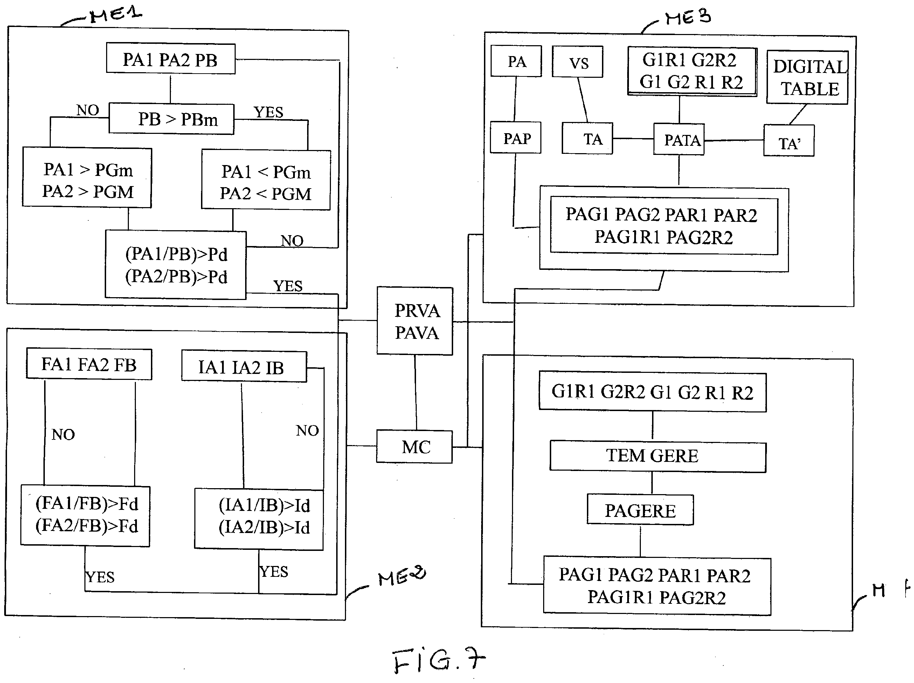

La figure 7 est une représentation schématique d'un organigramme de fonctionnement représentant les différentes interconnexions entre les différents moyens de mesure et de calcul composant le dispositif selon l'invention.

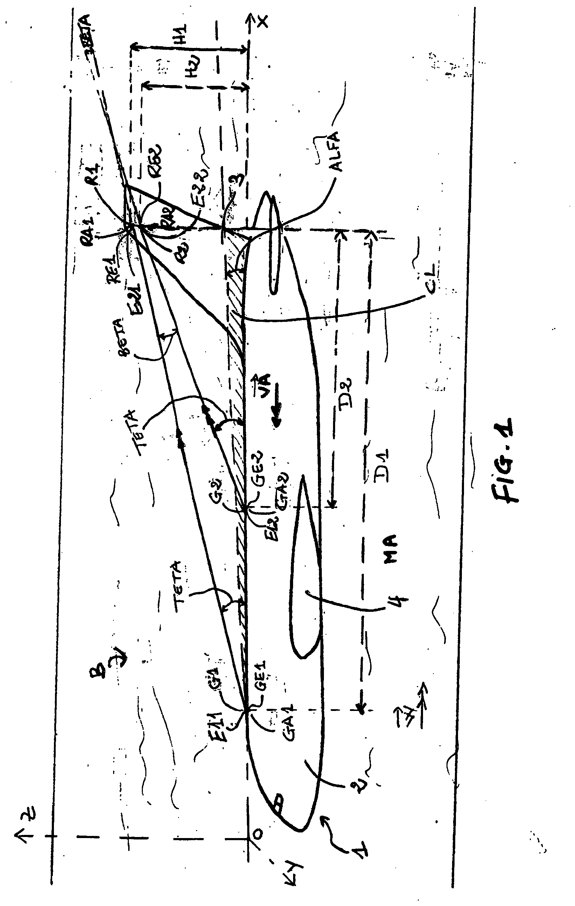

Sur la figure 1 est représentée une vue de côté dans le plan XOZ d'un avion gros porteur moderne. Cette figure représente un premier mode de réalisation du dispositif selon l'invention. Un premier générateur d'onde acoustique GA1 est placé près du plan de symétrie avion sur la partie supérieure et à l'avant de l'avion. Ce générateur émet un train d'onde caractéristique au-dessus et en arrière. Près du bord d'attaque supérieur de la dérive, notamment au niveau de l'empennage, est placé un récepteur d'ondes acoustiques RA1. Le train d'onde se déplace dans l'air à la vitesse du son VS. Un deuxième générateur d'ondes acoustiques GA2 est placé près du plan de symétrie avion et sur la partie supérieure et centrale de l'avion. Ce générateur émet un train d'onde caractéristique au-dessus et en arrière. Près du bord d'attaque supérieur de la dérive, notamment au niveau de l'empennage, est placé un récepteur d'ondes acoustiques RA2. Les capteurs de positions GE1, GE2, RE1, RE2 sont placés respectivement à la même position que chaque générateur GA1, GA2 et chaque récepteur RA1, RA2 pour mesurer en temps réel la position de chaque générateur et récepteur et/ou la distance parcourue par les trains ondes émis par les générateurs GA1 et GA2 vers les récepteurs RA1 et RA2 respectivement et enfin, d'évaluer l'aéroélasticité.

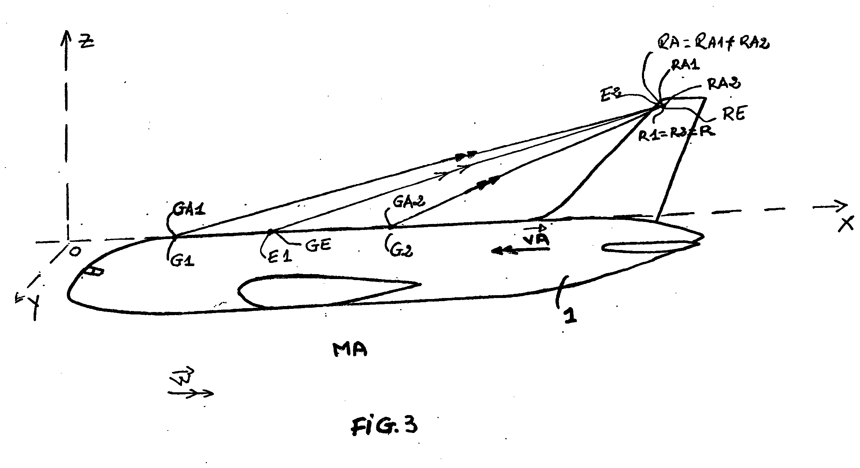

Sur la figure 3 est représentée une vue de côté d'un avion gros porteur moderne. Cette figure représente un deuxième mode de réalisation du dispositif selon l'invention. Un premier générateur d'ondes acoustiques GA1 est placé près d'un plan de symétrie avion et sur la partie supérieure et à l'avant de l'avion. Ce générateur émet un train d'onde caractéristique au-dessus et en arrière. Près du bord d'attaque supérieur de la dérive est placé un récepteur d'ondes acoustiques RA = RA1 + RA2. Les trains d'ondes acoustiques se déplacent dans l'air à la vitesse du son VS. Un deuxième générateur d'ondes acoustiques GA2 est placé près du plan de symétrie avion et sur la partie supérieure et centrale de l'avion. Ce générateur émet un train d'onde caractéristique au-dessus et en arrière. Le capteur RA est conçu pour recevoir également les trains d'ondes générés par les capteurs GA1 et GA2. Au moins un capteur de position GE est placé entre les générateurs GA1 et GA2 et au moins un capteur de position RE est placé proche du récepteur RA pour évaluer en temps réel la précision sur la position de chaque générateur et/ou récepteur, et/ou sur la distance parcourue par les trains d'ondes émis par les générateurs GA1 et GA2 vers le récepteur RA respectivement et notamment la variabilité des positions géométriques des capteurs (générateurs et récepteurs).

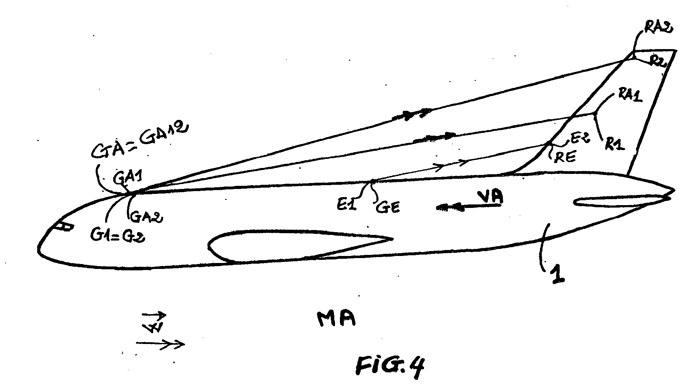

Sur la figure 4 est représentée une vue de côté d'un avion gros porteur moderne. Cette figure représente un troisième mode de réalisation du dispositif selon l'invention. Un générateur d'ondes acoustiques GA est placé sur la partie supérieure de l'avion et notamment près du plan de symétrie avion et à l'avant de l'avion. Ce générateur émet un train d'onde caractéristique au-dessus et en arrière. Près du bord d'attaque supérieur de la dérive, notamment au niveau de l'empennage (3) est placé un récepteur d'ondes acoustiques RA1. Près du bord d'attaque supérieur de dérive est placé en outre un récepteur d'onde acoustique RA2 recevant également les trains d'ondes générés par GA. Un capteur de position GE est placé près du plan de symétrie sur le même axe que le générateur GA et un capteur de position RE est placé près du bord d'attaque supérieur de la dérive proche de RA1 et RA2.

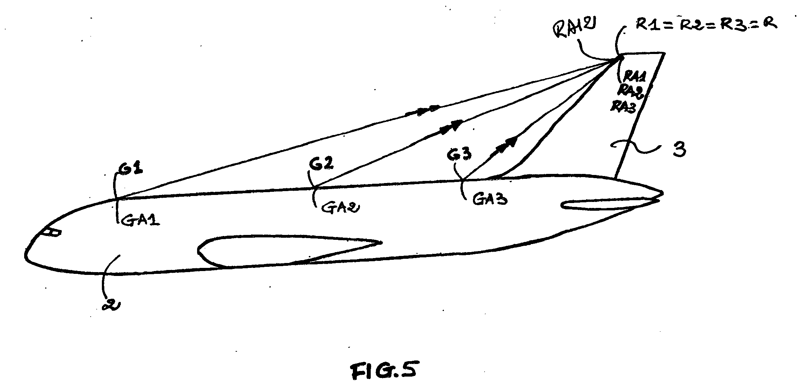

Sur la figure 5 est représentée une vue de côté d'un avion gros porteur moderne. Cette figure représente un quatrième mode de réalisation du dispositif selon l'invention. Trois générateurs acoustiques GA1, GA2 et GA3 sont placés sur le haut du fuselage (2) près du plan de symétrie avion respectivement sur la partie avant, sur la partie centrale, et sur la partie arrière du fuselage (2). Ces générateurs émettent des trains d'ondes au-dessus et en arrière. Près du bord d'attaque supérieur de la dérive (3), notamment au niveau de l'empennage (3) est placé un récepteur d'ondes acoustiques RA12 = RA1 + RA2 + RA3. Ce capteur acoustique RA12 est conçu pour recevoir les trois trains d'ondes générés par les générateurs GA1, GA2 et GA3 respectivement.

Dans un autre exemple de réalisation non représenté ici, un premier générateur acoustique est placé près du plan de symétrie avion et sur la partie supérieure de l'entrée d'air du moteur central, ce générateur émet des trains d'ondes caractéristiques au-dessus et en arrière. Près du bord d'attaque supérieur de la dérive est placé un récepteur d'ondes acoustiques et près du bord d'attaque et à mi-hauteur de la dérive est également placé un autre récepteur d'ondes acoustiques recevant également le train d'onde généré par ledit générateur.

En référence à la figure 1, est représenté un dispositif de mesure de grande précision, en temps réel, de la vitesse anémométrique VA d'un aéronef (1) par rapport à une masse d'air ambiante MA environnant ledit aéronef, et tenant compte des conditions opérationnelles et/ou atmosphériques de l'environnement où se situe ledit aéronef. La masse d'air ambiante MA a un sens de déplacement par rapport à l'aéronef (1) représenté par le vecteur W allant de l'amont à l'aval, c'est-à-dire, dans le sens contraire du déplacement de l'aéronef. En effet, l'aéronef (1) reçoit l'air ambiant MA par sa partie avant et se déplace dans une direction opposée au vecteur W. Le sens de déplacement de l'aéronef (1) est représenté par le vecteur VA, correspondant à la direction du vecteur vitesse anémométrique de l'aéronef (1). L'aéronef (1) est capable d'évoluer dans un domaine de vitesse subsonique et/ou transsonique et/ou supersonique. L'aéronef (1) comprend principalement un fuselage (2), une voilure (4), un empennage (3) (stabilisateur horizontal et/ou dérive) et au moins un train d'atterrissage. L'aéronef comprend au moins une couche limite CL l'environnant laquelle a une épaisseur définie par un angle ALFA, ce dit angle ALFA est défini entre la surface externe de l'aéronef (1) et une surface où l'écoulement est proche de l'écoulement relatif à l'infini amont. L'aéronef (1) a un axe longitudinal OX, un axe latéral OY, un axe vertical OZ, lesdits axes formant un repère orthonormal OXYZ constituant le repère géométrique aéronef.

L'aéronef (1) comprend une structure faiblement élastique capable de se déformer légèrement dans le repère OXYZ, en fonction des conditions opérationnelles et/ou atmosphériques, par exemple en fonction des contraintes aérodynamiques et/ou mécaniques et/ou thermiques subies par ledit aéronef.

L'aéronef génère un bruit B lors de son déplacement et/ou de son fonctionnement dans la masse d'air ambiante MA. Il s'agit du bruit moteur, du bruit des échappements, éventuellement du bruit des roulements, et principalement du bruit aérodynamique. Un système de contrôle actif est développé et mis en place pour contrôler ledit bruit B.

Tel que représenté sur la figure 1, le dispositif selon l'invention comprend deux générateurs d'ondes acoustiques GA1 et GA2, capables d'émettre chacun au moins un train d'onde acoustique. Lesdits générateurs GA1 et GA2 sont fixés sur la structure de l'aéronef (1) respectivement à une position G1 et G2 en suivant les légères déformations de la structure dudit aéronef (1) suivant les directions OX, OY et OZ.

Ledit dispositif comprend également deux récepteurs d'ondes acoustiques RA1 et RA2, fixés sur la structure dudit aéronef (1) respectivement à une position R1 et R2, en suivant les légères déformations de la structure dudit aéronef (1) suivant les directions OX, OY et OZ. Lesdits récepteurs RA1 et RA2 sont situés respectivement en aval des générateurs GA1 et GA2 respectivement. Le récepteur acoustique RA1 est capable de recevoir au moins un train d'onde émis par le générateur d'ondes acoustiques GA1 et le récepteur acoustique RA2 est capable de recevoir au moins un train d'onde émis par le générateur d'ondes acoustiques GA2. Une telle disposition permet d'avoir deux trajets de trains d'ondes acoustiques correspondants à deux équations mathématiques à deux inconnues, dont les inconnues sont la vitesse anémométrique VA et la vitesse du son VS de façon à déterminer en une seule mesure, la vitesse anémométrique VA et la vitesse du son VS.

Selon une variante de réalisation, le récepteur acoustique RA1 est capable de recevoir au moins un train d'onde acoustique émis par les générateurs d'ondes acoustiques GA1 et GA2 et le récepteur acoustique RA2 est capable de recevoir au moins un train d'onde émis par les générateurs d'ondes acoustiques GA1 et GA2. Une telle disposition permet d'avoir quatre trajets de trains d'ondes acoustiques, correspondant à quatre équations mathématiques ayant quatre inconnues parmi lesquelles il y a la vitesse anémométrique VA et la vitesse du son VS.

Chaque train d'onde émis par les générateurs a un cheminement allant de l'amont vers l'aval dans une direction sensiblement suivant le vecteur W pour être reçu par au moins un récepteur. En effet, dans la direction du vecteur W, l'onde acoustique est entrainée par la masse d'air ambiante et parvient facilement à atteindre le récepteur placé à quelques mètres. De cette manière, chaque onde émis par au moins un générateur est capable d'atteindre le récepteur quel que soit l'écoulement, car le vecteur vitesse de l'onde acoustique à la même direction que le vecteur W représentant l'écoulement.

Chaque train d'onde a une fréquence acoustique comprise dans la bande des ultrasons, notamment une bande comprise entre 10 kHz et 100 kHz. Cette bande de fréquence est choisie pour permettre une utilisation aisée aussi bien en faible écoulement (écoulement homogène) qu'en fort écoulement (écoulement turbulent) en tenant compte des conditions opérationnelles et/ou atmosphériques environnant l'aéronef, notamment l'attitude. De plus dans cette bande de fréquence, le rendement d'émission des générateurs, la variation de la directivité avec la fréquence, la variation de l'absorption, les perturbations du niveau de bruit et les contraintes de traitement de signal en temps réel sont faibles. De plus dans cette bande de 10 kHz et 100 kHz, la longueur d'onde, dépendant des conditions opérationnelles et/ou atmosphériques, varie très faiblement.

Les générateurs et les récepteurs sont coordonnés et/ou encadrés géométriquement par une relation géométrique appelée facteur de positionnement géométrique qui définit la position et/ou l'emplacement géométrique des capteurs (générateur et récepteur) sur le fuselage (2) et/ou sur l'empennage (3) de l'aéronef (1) et notamment par rapport à la couche limite CL.

Dans le mode de réalisation selon la figure 1, le dispositif selon l'invention comprend au moins deux facteurs de positionnement géométrique FP1 et FP2 définissant le domaine de positionnement entre les générateurs GA1 et GA2 et les récepteurs RA1 et RA2, dans le repère OXYZ, tels que FP1 = D1/H1 et FP2 = D2/H2. Ce domaine de positionnement est choisi de tel sorte que le facteur de positionnement géométrique FP1 soit toujours supérieur au facteur de positionnement géométrique FP2, et en outre le facteur de positionnement géométrique FP2 soit compris entre une valeur minimale FPMIN et une valeur maximale FPMAX prédéfinie.

Chaque train d'onde émis par le générateur GA1 et/ou GA2 vers le récepteur RA1 et/ou RA2 font chacun, avec l'axe OX, au moins un angle TÉTA supérieur ou égal un ALFA et lesdits trains d'ondes faisant en outre entre eux au moins un angle BETA inférieur à 90 degrés, mais différent de zéro, dans le plan XOY et/ou XOZ et/ou YOZ du repère OXYZ. De plus la différence d'angle TETA - ALFA étant comprise entre 0,02 degré et une valeur TETAmax dépendant des caractéristiques géométriques de l'aéronef.

Avantageusement, la valeur minimale FPMIN et la valeur maximale FPMAX du facteur de positionnement géométrique sont choisies telles que : FPMIN=0,6 et FPMAX=8. La valeur maximale TETAmax est choisie sensiblement égale à 75 degrés de telle sorte que dans le plan XOZ, la valeur absolue de la différence TETA - BETA soit inférieure à 90 degrés, de préférence inférieure à 75 degrés.

Ces différents paramètres, TETA, ALFA, BETA, FP1, FP2, FPMIN, FPMAX permettent de faire en ce que les effets d'atténuation et/ou d'absorption de la puissance des trains soient faibles dans les zones d'interfaces entre l'aéronef et le fluide l'environnant lors d'un mouvement relatif entre ledit aéronef et le fluide l'environnant. De façon générale, elles permettent d'éviter toutes perturbations des trains d'ondes acoustiques dans la couche limite. Pour rappel, la couche limite représente la région de l'écoulement où les effets visqueux sont au moins aussi importants que les effets inertiels (en termes d'ordre de grandeur). Ce n'est en effet pas le cas loin de la paroi, où l'écoulement est alors dit « d'Euler », et où les effets visqueux ne se font pratiquement pas ressentir.

Selon d'autres caractéristiques de l'invention, chaque train d'onde émis par un générateur GA1 ou GA2 vers le récepteur RA1 et/ou RA2 fait avec l'axe OX un angle TÉTA supérieur ou égal à 4 degrés. Les trains d'ondes émis par les générateurs GA1 et GA2 font en outre entre eux un angle BETA supérieur à 4 degrés.

La valeur de l'angle TETA est choisie de telle sorte que l'influence de la couche limite sur la propagation de l'onde acoustique soit sensiblement négligeable et que la faible épaisseur de la couche limite implique que les dérivées de la vitesse dans la direction de propagation de l'onde acoustique soient beaucoup plus faibles, notamment sensiblement négligeables. Dans le cadre de la présente invention, la couche limite est due aux phénomènes aérodynamiques, notamment par l'écoulement non linéaire autour de l'aéronef et/ou généré par le déplacement de l'aéronef dans la masse d'air l'environnant.

La valeur de l'angle BETA est choisie de telle sorte que l'influence de la couche limite sur la réception de l'onde acoustique soit sensiblement négligeable et que les trains d'ondes émis par au moins un générateur GA1 ou GA2 soient reçus soit par un récepteur, soit par les deux récepteurs ; ce qui permet de déterminer directement, pour une seule mesure, la vitesse anémométrique de l'aéronef, la vitesse du son dans la masse d'air environnant l'aéronef et éventuellement, mais pas obligatoirement, l'angle d'incidence et l'angle de tangage. Cette valeur de BETA est aussi choisie pour éviter les effets de l'incidence anémométrique.

Lorsque l'onde acoustique est émise dans la couche limite, compte tenu des conditions atmosphériques sévères et des différentes contraintes aérodynamiques et/ou mécaniques et/ou thermiques subies par l'aéronef, elle est piégée dans le puits de potentiel créé par la couche limite et met un certain temps pour sortir de ce dernier. En effet, dans les conditions atmosphériques sévères et compte tenu des différentes contraintes aérodynamiques et/ou mécaniques et/ou thermiques subies par l'aéronef, l'influence de la turbulence de l'écoulement amont et le nombre de Reynolds deviennent très importants dans la morphologie et la dynamique des écoulements turbulents fortement anisotropes autour de l'aéronef et par conséquent sur la distribution des pressions à la surface du fuselage (2) et éventuellement de l'empennage (3) et/ou de la voilure (4). Ce qui engendre un effet considérable sur la couche limite le long de la structure de l'aéronef et sur les points de recollements. Également, la turbulence amont a une influence sur l'emplacement du point de recollement des couches de cisaillement et les conséquences peuvent être très importantes en aéroélasticité. Pour éviter cette contrainte qui induit un retard ou une avance à l'onde acoustique et qui semble modifier la trajectoire de ladite onde et la précision sur la mesure de la vitesse, les capteurs (générateurs et récepteurs) sont placés dans une zone où l'épaisseur de la couche limite est faible en respectant une relation géométrique définie par les paramètres de sécurité appelée facteur de positionnement géométrique FP. En effet, les générateurs et les récepteurs doivent être positionnés correctement afin de faire fonctionner au mieux le système pour obtenir une meilleure précision sur la mesure de la vitesse.

Afin d'augmenter la précision du dispositif selon l'invention, il faut s'éloigner des domaines où les équations, permettant de déterminer la vitesse à partir des temps de parcours, sont équivalentes pour obtenir plus d'information et de précision sur la valeur de la vitesse anémométrique. À cet effet, le facteur de positionnement géométrique FP2 du couple générateur-récepteur acoustique (GA2, RA2) ou (GA2, RA1) correspondant au rapport de la distance D2 sur la hauteur H2 (D2/H2) est choisi strictement inférieur à au moins un facteur de positionnement FP1 du couple générateur-récepteur acoustique (GA1, RA2) ou (GA1, RA1) correspondant au rapport de la distance D1 sur la hauteur H1(D1/H1), où D1 est la distance sur l'axe OX entre le générateur GA1 et le récepteur RA1 ou RA2, et D2 la distance sur l'axe OX entre le générateur GA2 et le récepteur RA1 ou RA2, H1 est la distance sur l'axe OZ entre le générateur GA1 et le récepteur RA1 ou RA2, et D2 la distance sur l'axe OZ entre le générateur GA2 et le récepteur RA1 ou RA2.

Conformément à l'invention, la vitesse anémométrique VA et la vitesse du son VS, et éventuellement l'angle d'incidence, sont déterminées à partir des données géométriques et des temps de parcours des trains d'ondes acoustiques. Pour pouvoir déterminer la vitesse avec précision, il est préférable que le facteur de positionnement géométrique FP2 soit compris entre une valeur minimale FPMIN prédéfinie, de préférence FPMIN=0,6 et une valeur maximale FPMAX prédéfinie, de préférence FPMAX=8.

Avantageusement, le facteur de positionnement géométrique FP1 est toujours supérieur au facteur de positionnement géométrique FP2, et en outre ledit facteur de positionnement géométrique FP2 est compris entre une valeur minimale FPMIN et une valeur maximale FPMAX prédéfinie.

Avantageusement, les trains d'ondes émis par le générateur GA1 et/ou GA2 vers le récepteur RA1 et/ou RA2 font, avec l'axe OX, au moins un angle TÉTA supérieur ou égal à ALFA et lesdits trains d'ondes font en outre entre eux au moins un angle BETA inférieur à 90 degrés, mais différent de zéro, dans le plan XOY et/ou XOZ et/ou YOZ du repère OXYZ, et que la différence d'angle TETA - ALFA soit comprise entre 0,02 degré et une valeur TETAmax dépendant des caractéristiques géométriques de l'aéronef aéronef.

Avantageusement, FPMIN = 0,6 et FPMAX = 8 et la valeur de TETAmax est sensiblement égale à 75 degrés de telle sorte que dans le plan XOZ, la valeur absolue de la différence TETA - BETA soit inférieure à 90 degrés, de préférence inférieure à 75 degrés.

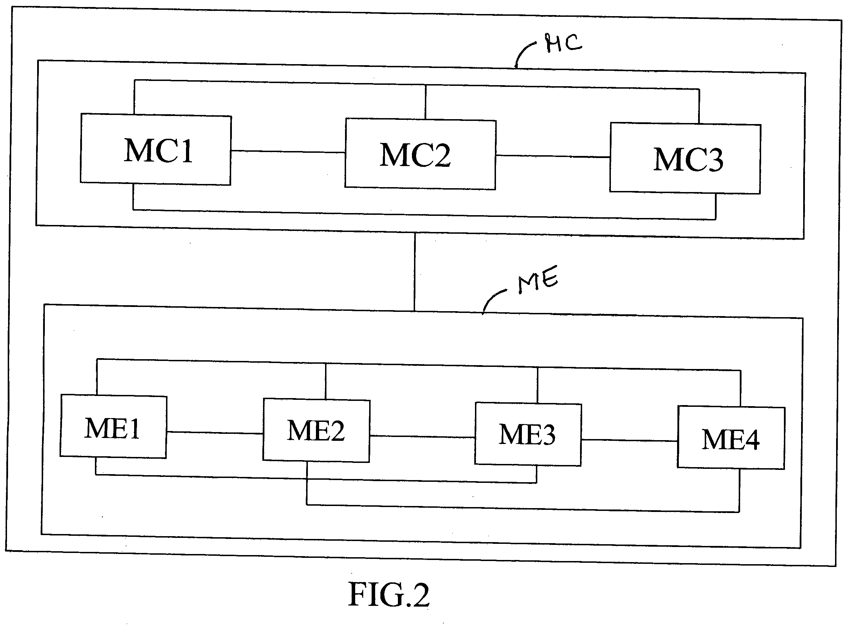

En référence à la figure 2, le dispositif selon l'invention comprend, au moins un moyen MC et un moyen ME de mesure et de calcul.

Le moyen MC est un moyen de mesure et de calcul, en temps réel, actif et automatique, de la vitesse anémométrique VA avec une précision absolue PAVA ou une précision relative PRVA exprimée en pour cent telle que PRVA=100xPAVA/VA. Ce moyen MC comprend simultanément :
∘ au moins un moyen MC1 de mesure et de calcul du temps T1 de parcours du train d'onde entre le générateur GA1 et le récepteur RA1 et du temps T2 de parcours du train d'onde entre le générateur GA2 et le récepteur RA2 en suivant les légères déformations de la structure de l'aéronef (1), et
∘ au moins un moyen MC2 de mesure et de calcul des positions G1, G2, R1, R2 et/ou des distances G1R1 et G2R2 correspondant respectivement à la distance entre le générateur G1 et le récepteur R1 et à la distance entre le générateur G2 et le récepteur R2, en suivant les légères déformations de la structure de l'aéronef (1),
∘ au moins un moyen de mesure et de calcul MC3 de la vitesse anémométrique VA et de la vitesse du son VS en fonction de T1, T2, G1, G2, R1, R2 et/ou en fonction de T1, T2, G1R1, G2R2, en suivant les légères déformations de la structure de l'aéronef (1).

G1, G2, sont respectivement des positions géométriques des générateurs acoustiques GA1 et GA2, et R1 et R2 sont des positions géométriques des récepteurs acoustiques RA1, RA2.

Lesdites différentes positions géométriques et les distances G1R1 et G2R2 peuvent être mesurées avec grande précision mieux qu'un millième près de millimètre. Compte tenu des contraintes aérodynamiques et/ou mécaniques et/ou thermiques subit par l'aéronef, notamment les phénomènes d'aéroélasticités et des perturbations dues aux bruits générés par le déplacement de l'aéronef dans la masse d'air, les positions G1, G2, R1, R2 et les distances G1R1, G2R2 sont définies de façon à prendre en compte, lesdites contraintes et lesdites perturbations. Ce qui permet de mesurer et/ou calculer les positions G1, G2, R1, R2 et/ou les distances G1R1, G2R2 avec une précision meilleure qu'un millième près.

Les valeurs de T1 et T2 sont mesurées avec une précision meilleure que le dixième de la microseconde, de préférence meilleure que la nanoseconde. Les valeurs obtenues peuvent être vérifiées au sol, à vitesse nulle, et le système peut être recalibré par exemple à chaque mise en route du système. Il existe une relation mathématique univoque RM1 de la forme VA = RM1(T1, VS) entre le temps de parcours T1 et la vitesse de l'avion, pour une vitesse de son VS donnée. De même, il existe une relation mathématique univoque RM2 de la forme VA = RM2(T2, VS) entre le temps de parcours T2 et la vitesse de l'avion VA, pour une vitesse du son donnée. Ces relations conduisent à un système de deux équations à deux inconnues, les inconnues étant VA et VS. La résolution mathématique des dites équations donne la valeur de VS et de VA de façon très précise en fonction des contraintes et les perturbations précédemment évoquées.

Le moyen ME est un moyen de mesure et de calcul, actif et automatique, permettant de corriger la valeur de la vitesse anémométrique VA et éventuellement la valeur de la vitesse du son VS calculée avec le moyen MC de façon à améliorer la précision absolue PAVA et/ou la précision relative PRVA exprimée en pour cent tel que PRVA=100xPAVA/VA, en fonction des conditions opérationnelles comme le bruit par exemple et/ou en fonction des contraintes aérodynamiques et/ou mécaniques et/ou thermiques subies par ledit aéronef (1) comme l'aéroélasticité, la pressurisation de la cabine. La valeur de PRVA est de préférence inférieure à 1%.

Les deux moyens MC et le moyen ME sont en corrélation de façon à ce que, pour chaque valeur de T1, T2, G1, G2, R1, R2 et/ou de T1, T2, G1R1, G2R2 mesurées, puisse correspondre à une et une seule valeur de VA, une valeur de PAVA et/ou une valeur de PRVA. De cette façon, pour toutes sortes de contraintes précédemment évoquées, la valeur de la vitesse anémométrique est toujours précise.

Le moyen ME comprend une pluralité de moyen, ME1, ME2, ME3 et ME4, capable de vérifier et de corriger, en utilisant d'autres techniques de mesure et de calcul notamment itératif, la valeur de la vitesse anémométrique VA et la précision PAVA et/ou PRVA à chaque instant quel que soit les contraintes et/ou les conditions atmosphériques sévères.

Les moyens ME et MC comprennent des systèmes de contrôle actif du bruit aérodynamique ou ambiant. Ce système de contrôle actif comprend un système de contrôle du bruit des hélices ou des moteurs, un système de contrôle du bruit de soufflante, un système de contrôle du bruit dû à la couche limite turbulente, un système de contrôle de bruit des écoulements.

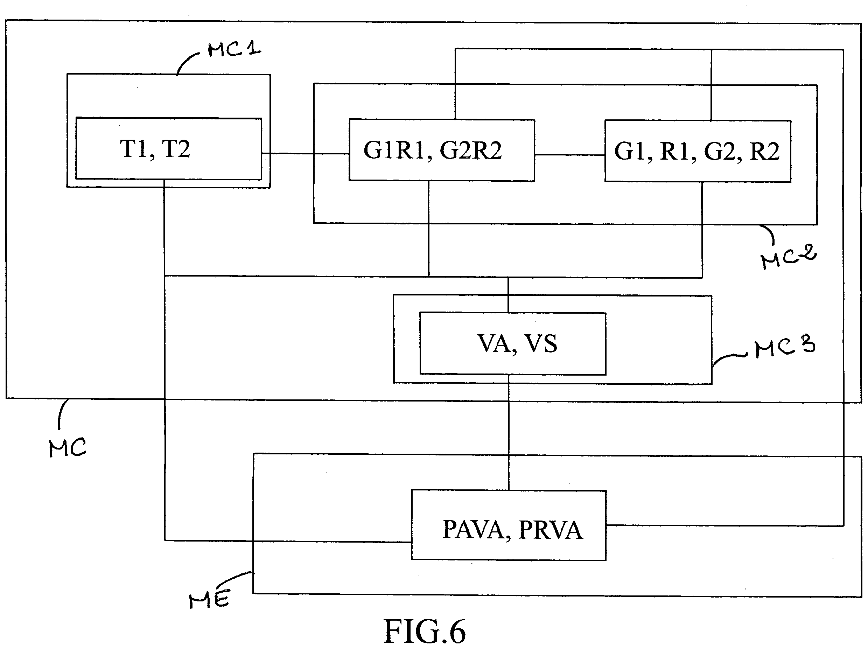

Tel que représenté sur la figure 1 et la figure 6, un procédé de fonctionnement du dispositif selon l'invention est représenté. Selon l'invention, au moins deux trains d'ondes sont émis respectivement par le générateur acoustique GA1 et GA2 en direction respectivement des récepteurs RA1 et RA2, lesdits trains d'ondes étant sensiblement dans la même direction que le vecteur W. Le récepteur RA1 reçoit au moins une onde émise par GA1 et le récepteur RA2 reçoit au moins une onde émise par GA2. À partir du moyen MC, on mesure les temps de parcours des trains d'ondes T1 et T2 et on calcule et/ou mesure, à partir des positions G1, G2, R1, R2, les distances G1R1 et G2R2. Puis on calcule la valeur de la vitesse avion VA et de la vitesse du son VS en fonction de T1, T2, G1, G2, R1, R2 et/ou en fonction de T1, T2, G1R1, G2R2.

En référence à la figure 1, le dispositif selon l'invention comprend en outre, mais pas obligatoirement, deux générateurs d'ondes électromagnétiques GE1 et GE2 capables d'émettre au moins un train d'onde électromagnétiques, ledit train d'onde ayant une fréquence adaptée à la réglementation aérienne et les performances requises, ladite fréquence étant de préférence comprise entre 1 et 20 GHz ; et deux récepteurs d'ondes électromagnétiques RE1 et RE2 capables de recevoir ledit train d'onde électromagnétiques émis par lesdits générateurs GE1 et GE2. Les générateurs GE1 et GE2 sont fixés sur la structure de l'aéronef à une position E11 et E12 respectivement en suivant les légères déformations de la structure de l'aéronef (1). Les récepteurs RE1 et RE2 sont fixés sur la structure de l'aéronef à une position E21 et E22 respectivement en suivant les légères déformations de la structure de l'aéronef (1). De cette façon, il est possible de mesurer la déformation relative de la structure dudit aéronef (1), notamment l'aéroélasticité, en mesurant en temps réel la distance parcourue par l'onde électromagnétique et en comparant ladite distance aux valeurs des distances séparant les générateurs et les récepteurs au repos.

En référence à la figure 3, l'aéronef (1) comprend deux générateurs acoustiques GA1 et GA2 capables d'émettre au moins un train d'onde acoustique vers un récepteur RA. Dans ce mode de réalisation, les récepteurs RA1 et RA2 sont confondus et regroupés en un seul récepteur RA ou encore le récepteur RA est un récepteur multifonction. Ce dernier constitue donc un seul récepteur et unique capable de recevoir le train d'onde émis par les deux générateurs acoustiques RA1 et RA2.

Selon d'autres caractéristiques de l'invention, les récepteurs RA1 et RA2 ne sont pas confondus ou regroupés, mais placés en un seul point R1 = R2 = R.

Selon d'autres caractéristiques de l'invention, le dispositif comprend en outre un générateur d'onde électromagnétique GE capable d'émettre un train d'onde électromagnétique vers un récepteur d'ondes électromagnétiques RE. Les générateurs acoustiques GA1 et GA2 sont fixés sur la structure de l'aéronef à une position G1 et G2 respectivement en suivant les légères déformations de la structure de l'aéronef (1). Les récepteurs acoustiques RA1 et RA2 sont fixés sur la structure de l'aéronef à une position R1 et R2 respectivement : R1 = R2 = R, en suivant les légères déformations de la structure de l'aéronef (1). Le générateur électromagnétique GE et le récepteur électromagnétique RE sont fixés sur la structure de l'aéronef à une position E1 et E2 respectivement en suivant les légères déformations de la structure de l'aéronef (1).

En référence à la figure 4, le dispositif selon l'invention comprend un générateur acoustique GA regroupant les générateurs acoustiques GA1 et GA2 ou un générateur acoustique multifonction GA, deux récepteurs acoustiques RA1 et RA2. Il comprend en outre, mais pas obligatoirement, un générateur électromagnétique GE et un récepteur électromagnétique RE. Le générateur acoustique GA est capable d'émettre au moins deux trains d'ondes acoustiques et les deux récepteurs acoustiques RA1 et RA2 sont capables de recevoir au moins un train d'onde émis par le générateur acoustique GA. Le générateur électromagnétique GE est capable d'émettre au moins un train d'onde électromagnétique et le récepteur électromagnétique RE est capable de recevoir au moins un train d'onde émis par le générateur électromagnétique GE.

Selon d'autres caractéristiques de l'invention, le générateur acoustique GA comprend deux générateurs acoustiques GA1 et GA2.

Selon d'autres caractéristiques de l'invention, les générateurs GA1 et GA2 constituant le générateur GA sont fixés à des positions respectives G1 et G2, tel que G1 = G2.

En référence à la figure 5, le dispositif comprend trois générateurs acoustiques GA1, GA2, GA3 capables d'émettre chacun un train d'onde acoustique et au moins un récepteur acoustique RA capable de recevoir les trains d'ondes émis par lesdits générateurs acoustiques. Les générateurs acoustiques sont placés respectivement en des positions G1, G2 et G3 distinctes. Une alternative est en ce que le récepteur acoustique RA comprend une multiplicité de récepteurs, notamment RA1, RA2, RA3, fixés en une position R1=R2=R3=R.

D'autres modes de réalisations en terme de représentation et/ou de position géométrique des capteurs sont représentés dans le document WO 2012 150385 dans lequel ce dispositif est amélioré.

En référence à la figure 2 et à la figure 6, le moyen MC comprend une multiplicité de moyens de mesures et de calculs, notamment les moyens MC1, MC2, MC3. Lesdits moyens MC1, MC2, MC3 interagissent entre eux et avec d'autres moyens de mesure et/ou de calcul, notamment avec le moyen ME.

Le moyen MC1 est dédié principalement à la mesure et au calcul des temps de parcours d'ondes acoustiques dans un environnement sévère tenant compte des effets de la couche limite et des autres contraintes définies ci-dessus. Ce moyen est capable de mesurer les temps de parcours T1 et T2 avec une précision de l'ordre de quelques nanosecondes, car dans certains milieux, la différence des temps T1-T2 peut être de l'ordre de la microseconde. À cet effet, une précision accrue est nécessaire pour une mesure précise de la vitesse anémométrique.

Le moyen MC2 est dédié principalement à la mesure et au calcul des positions géométriques des générateurs et récepteurs acoustiques, notamment des distances séparant chaque récepteur et chaque générateur acoustique. Ce moyen est capable de mesurer et/ou calculer avec une précision de l'ordre du micromètre, notamment de l'ordre du nanomètre dans certain milieu, les positions géométriques G1, G2, R1, R2 des générateurs et récepteurs et/ou les distances G1R1, G2R2 séparant chaque générateur et chaque récepteur. Ledit moyen MC3 est couplé à d'autres moyens de mesure et/ou de calcul, notamment le moyen ME pour tenir compte de l'environnement sévère tenant compte des effets de la couche limite et des autres contraintes précédemment définies ci-dessus, notamment le phénomène d'aéroélasticité par exemple.

Le moyen MC3 est dédié principalement à la mesure et au calcul de la vitesse anémométrique VA et vitesse du son VS et éventuellement de l'angle d'incidence, de tangage, d'assiette, etc., à partir des temps de parcours de trains d'ondes acoustiques, notamment T1 et T2, et des distances séparant chaque générateur et chaque récepteur acoustique (G1R1, G2R2) et/ou les positions de chaque générateur et récepteur (G1, G2, R1, R2). Ce moyen est capable de calculer avec une précision de l'ordre de 0,01%, de préférence une précision inférieure à 1%, la vitesse anémométrique VA et éventuellement la vitesse du son VS. Ce moyen MC3 est couplé à d'autres moyens de mesure et/ou de calcul, notamment le moyen ME pour tenir compte de l'environnement sévère tenant compte des effets de la couche limite et des autres contraintes précédemment définies ci-dessus, notamment le phénomène d'aéroélasticité par exemple et pour qu'à chaque valeur de T1, T2, G1, G2, R1, R2 et/ou de T1, T2, G1R1, G2R2 mesurées, puisse correspondre à une et une seule valeur de VA, une valeur de PAVA et/ou une valeur de PRVA.

Tel que représenté sur la figure 2, le moyen ME comprend une multiplicité de moyens de mesures et de calculs, notamment le moyen ME1, ME2, ME3 et ME4.

Le moyen ME1 est un moyen de mesure, de calcul et de régulation de puissance des trains d'ondes acoustiques émis par chaque générateur acoustique. Le générateur GA1 émet une onde acoustique avec une puissance PA1 et le générateur acoustique GA2 émet une onde acoustique avec une puissance PA2. Le moyen ME1 mesure et/ou calcule en outre la puissance PB du bruit ambiant B générée par l'aéronef dans les conditions opérationnelles et/ou par les contraintes aérodynamiques et/ou mécaniques et/ou thermiques subies par l'aéronef (1) dans la masse d'air ambiant MA, notamment le bruit B généré par le déplacement de l'aéronef dans la masse et/ou par les moteurs et/ou par la masse d'air environnant l'aéronef. Le moyen ME1 est en outre un moyen de pilotage actif de la puissance PA1 et/ou PA2 en fonction de la puissance PB du bruit B de façon à ce que le rapport PA1/PB et/ou PA2/PB soit toujours supérieur à une valeur prédéterminée Pd dépendant des conditions opérationnelles et/ou par les contraintes aérodynamiques et/ou mécaniques et/ou thermiques, de préférence supérieure à 0,7 ou à 1,2. Un procédé simple permet de déterminer la valeur de Pd. Pd est naturellement une valeur sans dimension dépendant des conditions opérationnelles de l'aéronef ainsi que des contraintes aérodynamiques et/ou mécaniques et/ou thermiques. La valeur de Pd est déterminée par une itération qui compare la puissance du bruit B environnant l'aéronef avec les caractéristiques de l'environnement, car la différence entre le train d'onde acoustique émis par au moins un générateur et le bruit B est assez vague et cette appréciation est différente selon les cas. En effet, un train d'onde acoustique est défini en tant que bruit lorsque celui-ci est désagréable, gênant. Par exemple au sol, l'environnement de l'aéronef est humain, c'est-à-dire des personnes peuvent se mouvoir librement à proximité de l'aéronef. Dans de tels cas, le bruit est jugé en fonction des personnes autour de l'aéronef. Il convient donc de noter que les fréquences audibles par l'être humain (personnes) s'étendent de 20 Hz à 20 kHz. Au-dessus de 20 kHz, il s'agit d'ultrasons qui ne donnent pas lieu à une sensation sonore sauf exception. Un exemple plus simple de Pd est en ce que, au sol et à l'arrêt, les moteurs de l'aéronef, sont en marche, l'environnement et les moteurs, ensemble, génèrent un bruit B d'environ 80 décibels. Dans un tel cas, Pd est choisi à 1,2, soit PA1 et/ou PA2 égale à 100 décibels. Cette valeur de PA1 et/ou PA2 est acceptable, car elle n'est pas contraire avec les limites d'audition de l'être humain.

Un autre exemple est qu'au décollage d'un avion, la puissance PB est de 130 dB. Pb est dans ce cas choisi à 1,4 ou 2 de façon à obtenir un bon rapport signal bruit permettant de bien apprécier la valeur de la vitesse anémométrique VA de l'avion.

Un autre exemple est en ce que, lorsque la puissance acoustique du bruit B est inférieure à une valeur prédéterminée PBm (PB <PBm) dépendant des conditions opérationnelles et/ou par les contraintes aérodynamiques et/ou mécaniques et/ou thermiques, par exemple 60 décibels lorsque l'aéronef est à l'arrêt, alors la puissance émise par au moins un des générateurs GA1 et/ou GA2 est inférieure ou égale à une valeur prédéterminée PGm par exemple 110 décibels, et lorsque la puissance du bruit B est supérieure à la valeur prédéterminée PBm (PB > PBm) la puissance acoustique émise par au moins un des générateurs GA1 et/ou GA2 est égale à une valeur supérieure à ladite valeur prédéterminée PGm, par exemple 160 décibels.

Pour une bonne correspondance au mieux des mesures les valeurs de Pd et/ou une bonne pondération des valeurs de Pd tenant compte des conditions opérationnelles et/ou des contraintes aérodynamiques précédemment définies, des courbes de pondérations ont été établies dans la littérature faisant correspondre les fréquences et les puissances susceptibles d'avoir un impact à l'oreille humaine. Ces pondérations permettent de prendre en compte approximativement la variation de la sensibilité de l'oreille en fonction de la fréquence et de l'intensité des trains d'ondes. Pour une bonne appréciation du bruit B et pour une meilleure précision sur la mesure et/ou le calcul de la vitesse anémométrique de l'aéronef (1), la puissance du bruit B est mesurée en un endroit où la puissance des ondes acoustiques émises par le générateur GA1 et/ou GA2 est faible et/ou la puissance du bruit B est mesurée en un instant où la puissance des ondes émises par le générateur GA1 et/ou GA2 est faible.

De préférence, la valeur prédéterminée Pd est déterminée en utilisant les méthodes de corrélation de signal acoustique tenant compte des conditions de vol de l'aéronef et de l'électronique de référence relative au générateur et/ou récepteur. La méthode de corrélation de signal acoustique consiste à comparer un signal de bruit avec un signal d'émission d'au moins un générateur et réguler la puissance du signal en fonction de la sensibilité du récepteur et/ou de la puissance reçue par le récepteur acoustique.

Selon un procédé de fonctionnement du dispositif selon l'invention, les étapes suivantes sont successivement adoptées :
- on mesure la valeur de la puissance PA1 et/ou PA2 des trains d'ondes émis par les générateurs acoustiques et la puissance PB du bruit B ambiant et on calcule le rapport PA1/PB et/ou PA2/PB :
- on vérifie :
   ∘ si le rapport PA1/PB et/ou PA2/PB est supérieur à la valeur Pd prédéterminée en fonction des conditions opérationnelles et/ou en fonction des contraintes aérodynamiques et/ou mécaniques subies par ledit aéronef (1) dans la masse d'air MA, on garde constante la valeur de la puissance PA1et/ou PA2. Par exemple, à l'arrêt, cette valeur Pd est choisie égale à 1.2.
   ∘ si le rapport PA1/PB et/ou PA2/PB est inférieur ou égal à la valeur Pd, on augmente sensiblement la valeur de la puissance PA1 et/ou PA2 de façon à obtenir un rapport PA1/PB et/ou PA2/PB supérieur à Pd ;
- on corrige la valeur de la vitesse anémométrique VA et de la vitesse du son VS en fonction de T1, T2, G1, G2, R1, R2 et/ou en fonction de T1, T2, G1R1, G2R2 pour la valeur de puissance PA1 et/ou PA2 ;
- on calcule la précision absolue PAVA et/ou la précision relative PRVA exprimée en pour cent tel que PRVA=100xPAVA/VA, en fonction des conditions opérationnelles et/ou en fonction des contraintes aérodynamiques et/ou mécaniques subies par ledit aéronef (1) pour la valeur de puissance PA1 et/ou PA2.

Le moyen ME2 est un moyen de mesure et de calcul de la fréquence FA1 des trains d'ondes acoustiques émis par le générateur GA1 et de la fréquence FA2 des trains d'ondes acoustiques émis par le générateur acoustique GA2. C'est également un moyen de mesure et de calcul de l'impédance IA1 des trains d'ondes acoustiques émis par le générateur GA1 et de l'impédance IA2 des trains d'ondes acoustiques émis par le générateur acoustique GA2. Ce moyen ME2 mesure également la fréquence FB et/ou de l'impédance IB du bruit B généré par la masse d'air MA et/ou le déplacement de l'aéronef dans la masse d'air MA dans les conditions opérationnelles et/ou du bruit généré par les contraintes aérodynamiques et/ou mécaniques subies par l'aéronef (1) dans la masse d'air ambiant MA. Le moyen ME2 est particulièrement un moyen de pilotage actif de la fréquence FA1 et/ou FA2 en fonction de la fréquence FB du bruit B de façon à ce que le rapport FA1/FB et/ou FA2/FB soit toujours supérieur à une valeur prédéterminée Fd dépendant des conditions opérationnelles et/ou par les contraintes aérodynamiques et/ou mécaniques et/ou thermiques.

Le moyen ME2 est en outre un moyen de pilotage de l'impédance IA1 et/ou IA2 en fonction de l'impédance IB du bruit B de façon à ce que et/ou le rapport IA1/IB et/ou IA2/IB soit toujours supérieur à une valeur prédéterminée Id dépendant des conditions opérationnelles et/ou par les contraintes aérodynamiques et/ou mécaniques et/ou thermiques. Un procédé simple permet de déterminer les valeurs de Fd et Id. Ce procédé est équivalent à celui permettant de déterminer Pd. Par exemple à l'arrêt, l'aéronef est dans un environnement où la présence humaine est possible. De ce fait, la fréquence est adaptée de façon à ne pas détruire l'oreille humaine. Par exemple, la fréquence du bruit est de 4 kHz dans un aéroport, la valeur de Fd est choisie à 1,1.

Selon un procédé de fonctionnement du dispositif selon l'invention, les étapes suivantes sont successivement adoptées :
- on mesure la fréquence FA1 et/ou FA2 des trains d'ondes acoustiques émis par les générateurs acoustiques et la fréquence FB du bruit B ambiant environnant l'aéronef, et on calcule le rapport des fréquences FA1/FB et/ou FA2/FB.
- on vérifie :
   ∘ si le rapport FA1/FB et/ou FA2/FB est supérieur Fd, alors on garde constante les valeurs de FA1 et/ou de FA2.
   ∘ si le rapport FA1/FB et/ou FA2/FB est inférieur ou égal à Fd, on augmente sensiblement la valeur de la fréquence FA1 et/ou de FA2 de façon à obtenir un rapport FA1/FB et/ou FA2/FB supérieur à Fd.
- on calcule la nouvelle valeur de la vitesse avion VA et de la vitesse du son VS en fonction de T1, T2, G1, G2, R1, R2 et/ou en fonction de T1, T2, G1R1, G2R2 pour la valeur de la fréquence FA1 et/ou FA2.
- on calcule la précision absolue PAVA et/ou de la précision relative PRVA exprimée en pour cent tel que PRVA=100xPAVA/VA, en fonction des conditions opérationnelles et/ou en fonction des contraintes aérodynamiques et/ou mécaniques subies par ledit aéronef (1) pour la valeur de la fréquence FA1 et/ou FA2.

Selon un autre procédé de fonctionnement du dispositif selon l'invention, les étapes suivantes sont successivement adoptées :
- on mesure l'impédance IA1 et/ou IA2 des trains d'ondes acoustiques émis par les générateurs acoustiques et l'impédance IB du bruit B ambiant, et on calcule le rapport des impédances IA1/IB et/ou IA2/IB,
- on vérifie :
   ∘ si le rapport IA1/IB et/ou IA2/IB est supérieur à Id, alors on garde constante les valeurs de IA1 et/ou de IA2.
   ∘ si le rapport IA1/IB et/ou IA2/IB est inférieur ou égal à Id, on augmente sensiblement la valeur de la fréquence IA1 et/ou IA2 de façon à obtenir un rapport IA1/IB et/ou IA2/IB supérieur à Id respectivement.
- on calcule la nouvelle valeur de la vitesse avion VA et de la vitesse du son VS en fonction de T1, T2, G1, G2, R1, R2 et/ou en fonction de T1, T2, G1R1, G2R2 pour la valeur de la fréquence 1A1 et/ou IA2.
- on calcule la précision absolue PAVA et/ou la précision relative PRVA exprimée en pour cent tel que PRVA=100xPAVA/VA, en fonction des conditions opérationnelles et/ou en fonction des contraintes aérodynamiques et/ou mécaniques subies par ledit aéronef (1) pour la valeur de la fréquence IA1 et/ou IA2.

Dans une atmosphère donnée, la connaissance de la structure thermique de la masse d'air environnant l'aéronef ainsi que la direction du vent semble un paramètre important pour la détermination de la vitesse, car le son peut se propager moins bien à l'horizontale que sous des angles montants à cause du changement de densité. De plus l'atténuation est nettement moins forte sous le vent et le gradient de vent couche l'onde acoustique en le rabattant vers l'aéronef, à l'inverse l'onde se déplaçant contre le vent s'évanouit rapidement. D'où le choix de fixer les générateurs dans une position adaptée de façon à ce que chaque générateur émet un train d'onde de l'amont vers l'aval, c'est-à-dire, émet un train d'onde ayant la même direction que le vecteur W représentant l'air ambiant et en ce que chaque récepteur soit placé en une position susceptible de recevoir au moins un train d'onde acoustique émis par chaque générateur.

Le moyen ME3 est un moyen de mesure et de calcul des écarts algébriques PAG1 et PAG2 des positions des générateurs GA1 et GA2 respectivement et/ou des écarts algébriques PAR1 et PAR2 des positions des récepteurs RA1 et RA2 et/ou des écarts algébriques PAG1R1 et PAG2R2 des distances G1R1 et G2R2 respectivement en fonction des conditions opérationnelles et/ou en fonction des contraintes aérodynamiques et/ou mécaniques subies par ledit aéronef (1). Un procédé simple permet de déterminer les valeurs des précisions absolues précédemment définies. Un procédé simple consiste par exemple à la mesure de la distance séparant le générateur électromagnétique au récepteur électromagnétique à l'état initial et à un instant donné.

Le moyen ME3 peut également mesurer et calculer, à partir de la vitesse VS du son, une température TA de la masse d'air ambiant et une précision absolue PATA de ladite température déterminée à partir d'une corrélation entre la vitesse du son et des règles de correspondance tabulée dans la littérature entre la vitesse du son et la température pour déduire l'écart PAG1R1 de la distance G1R1 et PAG2R2 de la distance G2R2 en fonction des conditions opérationnelles et/ou en fonction des contraintes aérodynamiques et/ou mécaniques subies par ledit aéronef (1). Un procédé simple consiste par exemple à la mesure de l'aéroélasticité de l'aéronef à partir de la variation de la température. En effet, la structure de l'avion est conçue avec des matériaux ayant un coefficient de dilatation thermique.

Avantageusement, le moyen ME3 de mesure et de calcul calcule en outre, à partir de la vitesse VS du son, en utilisant les lois de correspondance tabulée reliant la vitesse du son et la température ambiante, la température TA de la masse d'air ambiant, puis en utilisant les lois de dilatations des matériaux et de la géométrie de l'aéronef, le moyen ME3 calcule les écarts PAG1R1 de la distance G1R1 et PAG2R2 de la distance G2R2 en fonction des conditions opérationnelles et/ou en fonction des contraintes aérodynamiques et/ou mécaniques subies par ledit aéronef (1).

Le moyen ME3 peut aussi mesurer et calculer, à partir de la vitesse anémométrique VA et/ou de la pression atmosphérique, une précision absolue PAP pour tenir compte de l'allongement de l'aéronef en fonction des forces de traînée appliquées sur les parties arrières de l'aéronef afin de déduire les écarts algébriques PAG1R1 de la distance G1R1 et PAG2R2 de la distance G2R2 en fonction des conditions opérationnelles et/ou en fonction des contraintes aérodynamiques et/ou mécaniques subies par ledit aéronef (1).

Selon un autre procédé de fonctionnement du dispositif selon l'invention, les étapes suivantes sont successivement adoptées :
- on mesure les positions G1 et G2 des générateurs GA1 et GA2 et/ou les nouvelles positions R1 et R2 des récepteurs RA1 et RA2 et/ou la nouvelle distance G1R1 et G2R2, en fonction des conditions opérationnelles et/ou en fonction des contraintes aérodynamiques et/ou mécaniques subies par ledit aéronef (1).
- on calcule la précision absolue de la position PAG1 et PAG2 des positions des générateurs GA1 et GA2 respectivement et/ou les écarts algébriques PAR1 et PAR2 des positions des récepteurs RA1 et RA2 et/ou les écarts algébriques PAG1R1 et PAG2R2 de la distance G1R1 et G2R2 respectivement en fonction des conditions opérationnelles et/ou en fonction des contraintes aérodynamiques et/ou mécaniques subies par ledit aéronef (1), notamment en tenant compte des phénomènes d'aéroélasticités.
- on calcule la valeur de la vitesse avion VA et de la vitesse du son VS en fonction de T1, T2, G1, G2, R1, R2 et/ou en fonction de T1, T2, G1R1, G2R2 en intégrant les corrections PAG1, PAG2 et/ou PAR1, PAR2 des positions G1, G2, R1, R2 respectivement et/ou les corrections PAG1R1, PAG2R2, des distances G1R1, G2R2 respectivement.
- on calcule la précision absolue PAVA et/ou de la précision relative PRVA exprimée en pour cent telle que PRVA=100xPAVA/VA, en fonction des conditions opérationnelles et/ou en fonction des contraintes aérodynamiques et/ou mécaniques subies par ledit aéronef (1) pour les valeurs de PAG1, PAG2 et/ou PAR1, PAR2 et/ou la PAG1R1, PAG2R2.

Le moyen ME4 est un moyen de mesure et de calcul du temps TEM de parcours de l'onde électromagnétique entre le générateur GE et le récepteur RE, et de la distance GERE entre le générateur GE et le récepteur RE en suivant les légères déformations de la structure de l'aéronef (1) de façon à obtenir l'écarts algébrique PAGERE de la distance GERE et de déduire les écarts algébriques PAG1R1 de la distance G1R1 et PAG2R2 de la distance G2R2 en fonction des conditions opérationnelles et/ou en fonction des contraintes aérodynamiques et/ou mécaniques subies par ledit aéronef (1).

Selon d'autres procédés de fonctionnement du dispositif selon l'invention, les étapes suivantes sont successivement adoptées :
- pour une condition opérationnelle et/ou des contraintes aérodynamiques et/ou mécaniques subies par ledit aéronef (1) noté CO1, on mesure le temps TEM de parcours de l'onde électromagnétique entre le générateur GE et le récepteur RE et on calcule la distance GERE
- pour une condition opérationnelle et/ou les contraintes aérodynamiques et/ou mécaniques subies par ledit aéronef (1) noté CO2, on mesure un nouveau temps TEM de parcours de l'onde électromagnétique entre le générateur GE et le récepteur RE et on calcule la nouvelle distance NGERE,
- on compare la nouvelle distance NGERE avec la distance GERE et on déduit l'écart algébrique PAGERE = NGERE - GERE de la distance entre GE et RE,
- on calcule la valeur de la vitesse avion VA et de la vitesse du son VS en fonction de T1, T2, G1, G2, R1, R2 et/ou en fonction de T1, T2, G1R1, G2R2 en intégrant la correction PAGERE aux valeurs des distances G1R1, G2R2 pour une condition opérationnelle et/ou des contraintes aérodynamiques et/ou mécaniques subies par ledit aéronef (1) notée CO2, on déduit les écarts algébriques PAG1R1 de la distance G1R1 et PAG2R2 de la distance G2R2,
- on calcule la précision absolue PAVA et/ou la précision relative PRVA exprimée en pour cent tel que PRVA=100xPAVA/VA, en fonction des conditions opérationnelles et/ou en fonction des contraintes aérodynamiques et/ou mécaniques subies par ledit aéronef (1) CO2 pour la valeur PAGERE obtenue.

Les moyens ME1, ME2, ME3 et ME4 sont en corrélation entre eux et échangent les données pour obtenir une meilleure précision de la valeur de la vitesse anémométrique et/ou de la vitesse du son et/ou de l'angle d'incidence. Ces moyens sont également en corrélation avec les moyens MC1, MC2 et MC3.

Également, tous les moyens constituant le moyen MC sont en corrélation entre eux et/ou tous les moyens constituant le moyen ME sont en corrélation entre eux de façon à ce que, pour une valeur de la vitesse anémométrique VA, correspond une et une seule mesure et/ou un et un seul calcul de la précision relative PAVA effectué par la corrélation des moyens MC et ME.

Selon l'invention, plusieurs techniques et/ou systèmes de mesure et/ou de calcul actif permettent d'évaluer les précisions relatives et/ou absolues sur la mesure de la position de chaque générateur et récepteur et/ou sur la mesure et/ou le calcul des distances séparant chaque générateur à chaque récepteur.

Une des techniques consiste en l'utilisation de capteurs de pression linéaires optiques adaptés à l'environnement de l'aéronef. En effet, ce type de capteur est fiable et capable de repérer des positions linéaires jusqu'à 10 km ou le long des parcours incurvés. Ce qui permet de mesurer en temps réel la position de chaque générateur et récepteur avec une précision de l'ordre du dixième de micromètre.

Une autre technique consiste en l'utilisation de capteurs optoélectroniques adaptés à l'environnement de l'aéronef. Ces capteurs disposent de la possibilité d'être couplés à plusieurs de façon à obtenir, par procédé de comparaison de phases, une plus grande précision, meilleure que le micromètre, de préférence quelques nanomètres.

Une autre technique consiste en l'utilisation de capteurs magnétostrictifs adaptés à l'environnement de l'aéronef. Ces capteurs disposent de la possibilité de fonctionner sans couplage avec les autres capteurs de position magnétostrictif. Il permet d'obtenir une plus grande précision, meilleure que le micromètre, de préférence quelques nanomètres. Ce capteur présente l'avantage en ce qu'il utilise un champ magnétique à impulsion adapté avec l'environnement de l'aéronef et notamment à l'environnement des fréquences radio des aéroports.

Selon un mode de réalisation, les récepteurs RA1 et RA2 et/ou les générateurs GA1 et GA2 ont une surface d'au moins 16 millimètres carrés de façon à ce que, des déformations structurales subies par l'aéronef, dans les conditions opérationnelles et/ou sous les effets des contraintes aérodynamiques et/ou mécaniques, soient négligeables et n'empêchent pas les récepteurs RA1 et RA2 de recevoir les trains d'ondes émis par le générateur GA1 et/ou GA2. Ce qui permet de minimiser les phénomènes d'aéroélasticités.

De préférence, au moins un générateur acoustique et/ou au moins un récepteur acoustique est placé en un point où les effets de déformations, notamment l'aéroélasticité subis par l'aéronef et/ou les effets de la couche limite sont sensiblement négligeables de façon à mesurer et calculer avec précision les distances séparant les autres générateurs acoustiques aux autres récepteurs acoustiques et/ou de mesurer avec précision les positions des autres générateurs acoustiques et/ou des autres récepteurs acoustiques.

Selon d'autres modes de réalisation de l'invention, chaque générateur acoustique et/ou récepteur acoustique comprend en outre un moyen MPT de mesure et de calcul de la température de leur fonctionnement avec une certaine précision. Ce moyen MPT permet également de calculer la précision sur la position de chaque générateur acoustique et/ou de chaque récepteur acoustique, et éventuellement la précision sur la mesure de la distance entre un générateur acoustique et un récepteur acoustique en utilisant le principe d'aéroélasticité des matériaux connu de la littérature.

Les générateurs acoustiques et/ou les récepteurs acoustiques choisis pour la mise en œuvre de l'invention sont des transducteurs MEMS ou des transducteurs magnétostrictifs, émettant dans la bande de tiers d'octave centrée sur 25kHz. Cette bande de fréquence choisie permet de déterminer les fréquences d'émission de chaque générateur. La structure de base des générateurs et récepteurs choisis est le point clé de l'ensemble du dispositif. Par exemple, le générateur et le récepteur sont formés d'une matrice de 100 (10x10) éléments identiques pouvant accepter une puissance maximale de 250 W chacun. Chaque élément a été conçu pour pouvoir couvrir la gamme de fréquences désirée. Les éléments sont associés en anneaux concentriques. Pour pouvoir contrôler la directivité, chaque anneau est associé à un amplificateur de puissance et à un préamplificateur de puissance. Ceci permet de pondérer les divers anneaux à l'émission et à la réception en vue de limiter les variations de directivité sur la bande.

Les amplificateurs de puissance sont des amplificateurs linéaires accordés ou non accordés (10 à 100 kHz) ; ceci permet une grande latitude au niveau de la conception de signaux acoustiques. Chaque module permet de préférence de délivrer 1 kW (+/- 90 V) sous une très faible impédance (0,1 Ohm). Compte tenu de la structure des anneaux, le niveau maximal dans l'axe sera de quelques centaines de décibels : 214 décibels à 30 kHz, 215 décibels à 50 kHz et 207 décibels à 70 kHz. Il est prévu de corriger ces variations par préfiltrage (préaccentuation) à l'émission du train d'onde. Ceci est facilement aménageable dans la mesure où les trains d'ondes émis sont précalculés et stockés sous forme numérique.

Les considérations de directivité citées sont, en fait, une superposition de vues à bande étroite pour décrire un système à large bande. Il est vrai que la définition d'un index de directivité à large bande est fort complexe, car ce dernier est fonction de deux variables qui sont l'angle et la fréquence. On peut cependant, comme première approche, considérer l'énergie émise (ou reçue) sur une bande de fréquence donnée. Cette distribution d'énergie est réduite au diagramme de directivité, si l'on se place à bande étroite. Cette considération énergétique permet une approche totalement à large bande du dispositif.

Un synoptique de dispositif selon l'invention comprend principalement, mais non exclusivement, trois parties essentielles : transducteur et électronique associée, amplificateurs de puissance et/ou de fréquence et/ou d'impédance, l'unité de traitement de donnée et de correction.

L'électronique associée est logée dans un compartiment étanche ; elle est reliée à la partie puissance, impédance, fréquence, traitement et correction. Ceci permet d'installer le transducteur sur le fuselage (2) de l'aéronef avec une meilleure stabilité, un niveau de bruit moins élevé.

Les opérations de traitement de trains d'ondes sont largement connues de l'état de la technique à l'exception des parties décrites par la présente invention. Selon l'invention, le prétraitement analogique est séparé par une bande de fréquence.

Le filtrage correspondant à la précision de la valeur de la vitesse anémométrique est réalisé par filtrage numérique en temps réel.

L'architecture de traitement permettant de calculer avec précision la valeur de la vitesse anémométrique proposée par la présente invention permet de s'affranchir des problèmes dus à l'élargissement de la bande de travail qui est celle des transducteurs MEMS ou des transducteurs magnétostrictifs, émettant dans la bande de tiers d'octave centrée sur 25kHz.

Selon une variante de réalisation de l'invention, les transducteurs utilisés sont des transducteurs piézoélectriques.

Selon d'autres variantes de réalisation de l'invention, les transducteurs utilisés sont des transducteurs magnétostrictifs.

Selon d'autres variantes de réalisation de l'invention, les transducteurs utilisés sont des transducteurs électrostatiques.

Selon d'autres variantes de réalisation de l'invention, les transducteurs utilisés sont des transducteurs CMUT.

Selon d'autres variantes de réalisation de l'invention, les transducteurs utilisés sont des transducteurs PMUT.

Avantageusement, au moins un des générateurs et/ou récepteurs acoustiques est fixé dans un endroit où l'épaisseur de la couche limite est faible et/ou où les effets de la couche limite sont faibles, de façon à ce que le temps de parcours du train d'onde émis par au moins un des générateurs et/ou reçu par au moins un récepteur dans ou hors de la couche limite soit très faible, notamment inférieur à une valeur prédéterminée TPmax. TPmax est une valeur arbitraire définie en fonction de la nature et de l'épaisseur de la couche limite. La valeur de TPmax est toujours supérieure à 1 microseconde pour obtenir une meilleure précision sur la valeur de la vitesse.

Avantageusement, les capteurs, notamment les générateurs, sont placés sur au moins une ailette placée sur le fuselage (2).

Selon d'autres caractéristiques de l'invention, le dispositif selon l'invention comprend au moins deux générateurs d'ondes électromagnétiques GE1 et GE2 fixés sur la structure dudit aéronef à une position E11 et E12 proche des générateurs GA1 et GA2 respectivement, notamment E11=G1 et/ou E12=G2, et/ou au moins deux récepteurs d'ondes électromagnétiques RE1 et RE2 fixés sur la structure dudit aéronef à une position E21 et E22 proche des récepteurs RA1 et RA2 respectivement, notamment E11=R1 et/ou E12=R2.

Selon d'autres modes de réalisations du dispositif selon l'invention, pour simplifier le dispositif et pour rendre le dispositif selon l'invention peu encombrant, les positions d'au moins deux générateurs sont confondues G1=G2 et/ou les positions d'au moins deux récepteurs sont confondues R1=R2.

En référence à la figure 4 et à la figure 5, le dispositif selon l'invention comprend un générateur acoustique GA12 comprenant au moins deux générateurs acoustiques GA1 et GA2, et/ou comprend un récepteur acoustique RA12 comprenant au moins deux récepteurs acoustiques RA1 et RA2.

Avantageusement, les positions G1 et G2 des générateurs GA1 et GA2 respectivement sont choisies sensiblement dans le plan de symétrie avion, dans une partie supérieure du fuselage (2) et/ou les positions R1 et R2 sont choisies sensiblement dans le plan de symétrie avion, derrière les positions GA1 et GA2, dans la partie supérieure de l'empennage vertical (3). L'avant et l'arrière correspondent à l'amont et à l'aval par rapport au déplacement de la vitesse. En d'autres termes, les générateurs sont placés en avant des récepteurs dans le sens de déplacement de la vitesse VA, ils reçoivent donc la masse d'air en premier, avant les récepteurs.

Selon d'autres variantes de réalisation, le dispositif selon l'invention comprend en outre, au moins trois générateurs d'ondes acoustiques et/ou au moins trois récepteurs d'ondes acoustiques et éventuellement un moyen de mesure et de calcul de l'incidence anémométrique à partir des temps de parcours des ondes acoustiques de façon à obtenir une meilleure précision sur la valeur de la vitesse VA à forte incidence.

Selon d'autres caractéristiques de l'invention, le dispositif comprend au moins un autre moyen de mesure de vitesse tel qu'un tube Pitot, de façon à comparer les vitesses et obtenir une redondance d'information.

Avantageusement, ledit autre moyen de mesure de vitesse est placé sur la structure de l'aéronef, et notamment sur une ailette placée sur le fuselage (2).

Selon un autre procédé de fonctionnement du dispositif selon l'invention, les étapes suivantes sont successivement adoptées :
- on calcule en outre, à partir de la vitesse VS du son, une température TA de la masse d'air ambiante et un écart PATA de ladite température déterminée à partir d'une corrélation entre la vitesse du son et les règles de correspondance entre la vitesse du son et la température
- on déduit les écarts algébriques PAG1R1 de la distance G1R1 et PAG2R2 de la distance G2R2 en fonction des conditions opérationnelles et/ou en fonction des contraintes aérodynamiques et/ou mécaniques subies par ledit aéronef (1).
- on calcule la valeur de la vitesse avion VA et de la vitesse du son VS en fonction de T1, T2, G1, G2, R1, R2 et/ou en fonction de T1, T2, G1R1, G2R2 pour les écarts algébriques PAG1R1 de la distance G1R1 et PAG2R2 de la distance G2R2,
- on calcule la précision absolue PAVA et/ou la précision relative PRVA exprimée en pour cent telle que PRVA=100xPAVA/VA, en fonction des conditions opérationnelles et/ou en fonction des contraintes aérodynamiques et/ou mécaniques subies par ledit aéronef (1) pour les valeurs des écarts algébriques PAG1R1 de la distance G1R1 et PAG2R2 de la distance G2R2 obtenue.

Il est clair que pour obtenir une valeur de la vitesse précise, la redondance de mesure est obligatoire. Pour cela, il est monté sur un aéronef au moyen de mesure décrit précédemment, de préférence deux ou trois dispositifs de mesure de vitesse VA décrits précédemment. Ledit aéronef comprend également un moyen de comparaison des valeurs des vitesses avion VA mesurées respectivement par chaque dispositif de façon à s'assurer d'une redondance accrue de la valeur de la vitesse VA pour améliorer la précision de pilotage de l'aéronef.

Selon d'autres modes de réalisation, l'aéronef, comprenant le dispositif selon l'invention, comprend en outre un moyen de mesure de la pression totale par exemple à l'aide d'un tube Pitot, obtenu à un endroit de l'aéronef, de façon à déduire la pression statique à l'infini en amont et d'obtenir une redondance sur la mesure de la vitesse VA de l'aéronef (1).

Selon d'autres caractéristiques de l'invention, chaque capteur comprend au moins un moyen de protection adapté en fonction de l'aéronef et/ou du domaine de vol l'aéronef. Ceci, pour tenir compte de réchauffement cinématique des conditions de vol.

Avantageusement, chaque capteur comprend une enveloppe extérieure comprenant un système d'adaptation à une montée de pression, notamment accidentelle provenant d'une décompression intempestive de l'avion.

Avantageusement, la protection des capteurs peut être constituée d'un matériau, notamment élastomère ou matériau poreux, provoquant une accélération des ondes sonores ultrasons, notamment lorsque lesdites ondes traversent ledit matériau. Ceci, pour compenser le retard que peut subir l'onde acoustique à la traversée de la couche limite et/ou dans la couche limite.

Avantageusement, le moyen de protection des capteurs précédemment évoqué est du type radôme.

L'invention décrite ci-dessus a permis de lever les doutes selon lesquels l'utilisation d'un tel dispositif dans des aéronefs capables de se déplacer dans les environnements sévères serait incertaine, voire même impossible. En effet, tous les problèmes qui sont le plus souvent rencontrés dans la conception des générateurs et récepteurs ont été résolus physiquement. On note par exemple la variation du rendement des générateurs et/ou récepteurs sur la bande de fréquence choisie, notamment la bande de 10 kHz à 80 kHz, de préférence 100 kHz :
- une variation de la directivité de la fréquence,
- une variation de l'adsorption du signal,
- une augmentation du niveau de bruit B,
- des contraintes de traitement en temps réel du signal des trains d'ondes acoustiques,
- l'interprétation des données conduisant au calcul de la valeur précise de la vitesse anémométrique VA de l'aéronef et de la vitesse du son VS.

On voit donc qu'il est possible de réaliser un dispositif de mesure de grande précision, en temps réel, de la vitesse anémométrique VA d'un aéronef (1) par rapport à une masse d'air ambiante MA environnant l'aéronef, et tenant compte des conditions opérationnelles et/ou atmosphériques, ledit dispositif permettant de déterminer avec une grande précision la vitesse VA de l'aéronef et la vitesse du son VS dans tout le domaine de vol de l'aéronef, subsonique, transsonique et supersonique, en choisissant des emplacements particuliers pour le générateur et le récepteur où la couche limite est relativement mince et en respectant les angles minimas prescrits existant entre les parcours des trains d'ondes.

Il est possible connaissant la vitesse réelle du son et la température ambiante d'en déduire le taux d'humidité. La connaissance de ce taux d'humidité de l'air peut être importante pour le pilote afin de connaitre avec précision les risques de givrage. Par exemple si la température est négative et si le taux d'humidité est élevé, les risques de givrages sont importants. En effet, la vitesse du son dans l'air varie principalement avec la température, puis un peu en fonction du taux d'humidité contenu dans l'atmosphère. Ici, notre système acoustique permet de connaitre la vitesse du son. Une prise de température permet de connaitre la température ambiante. Des tables donnent l'influence de l'humidité sur la vitesse du son. Il est donc possible de déduire le taux d'humidité de l'air en connaissant la vitesse réelle du son et la température. Par exemple, si la vitesse du son mesurée par le système acoustique est égale à la vitesse du son théorique dans l'air pour une température donnée, alors on peut en déduire que le taux d'humidité est nul.

Dans l'exemple non limitatif de réalisation illustré sur la figure 4, trois trains d'ondes acoustiques émis respectivement par trois générateurs GA1, GA2, GA3 sont acheminés vers un récepteur triple RA12. Ce récepteur est conçu pour recevoir les trois trains d'ondes les uns après les autres, ici acheminés en discontinu. Les temps de parcours de ces trois trains d'ondes sont respectivement T1, T2, T3 et les positions des générateurs sont respectivement G1, G2, G3, le récepteur étant en position R. Dans ce mode de réalisation, les angles entre les parcours des trains d'ondes (TETA et BETA) sont supérieurs ou égaux à 4 degrés. On démontre que si les générateurs et le récepteur triple sont sensiblement disposés selon la figure 4 alors il est possible de déduire de façon univoque les valeurs de la vitesse du son VS, de la vitesse anémométrique VA et de l'angle d'incidence de l'aéronef, à partir des coordonnées de position des générateurs et du récepteur triple, et des temps de parcours T1, T2, T3. Un calcul d'erreur, notamment de la précision relative PRVA et/ou de la précision absolue PAVA sur la valeur de la vitesse anémométrique, un calcul d'erreur sur la valeur de la vitesse du son VS et de l'angle d'incidence sont tout à fait compatibles des besoins aéronautiques.

On voit donc qu'il est possible, contrairement à ce qui était antérieurement imaginé, de calculer la vitesse d'un avion ou d'un drone par rapport à la masse d'air ambiant avec une bonne précision (mieux qu'un dixième de pour cent) à partir des données géométriques de positions des générateurs et des récepteurs, et ceci indépendamment des autres paramètres comme la pression, le taux d'humidité, la présence de gouttelettes d'eau, de brouillard, de neige, de poussières, ...

En comparant la vitesse calculée du son par le système acoustique, avec ce que devrait être la vitesse du son pour une température et en considérant les valeurs extrêmes de taux d'humidité, il est possible de vérifier que le système fonctionne correctement. En effet la vitesse du son varie peu en fonction du taux d'humidité (moins de pour cent pour des températures inférieures à 0 degré, et de quelques pour cent à des températures supérieures) le système acoustique peut donc inclure une fonction d'autocontrôle, ce que ne peuvent pas faire aujourd'hui les sondes Pitot et ce qui explique que ces sondes anémométriques sont au nombre de trois sur un même aéronef.

D'autre part, on voit que l'utilisation de composants classiques ayant des niveaux de précision standard permet d'arriver à une très bonne précision sur la mesure de la vitesse VA et conduit à une industrialisation à coût très faible.

Contrairement aux préjugés qui consistaient à croire que seules les sondes de type Pitot permettent de mesurer de façon précise la vitesse anémométrique d'un aéronef, le dispositif objet de la présente invention permet de fournir des informations plus précises et fiables, de vitesse anémométrique d'un aéronef dans des conditions atmosphériques sévères et en présence d'une multiplicité de contraintes, meilleure que celles des tubes Pitot. Il permet en outre une redondance réelle avec d'autres systèmes classiques de mesure de vitesse. Il permet en outre un autocontrôle de la vitesse affichée. Il permet également de connaitre le taux d'humidité de l'air ambiant, ce qui avec la connaissance de la température permet d'alerter le pilote sur les risques de givrage. L'homme du métier pourra appliquer ce concept à de nombreux autres systèmes similaires sans sortir du cadre technique de la présente invention, l'étendue de protection de l'invention étant uniquement définie par les revendications.

## Revendications

1. Dispositif de mesure de grande précision, en temps réel, de la vitesse anémométrique VA d'un aéronef (1) par rapport à une masse d'air ambiante MA environnant ledit aéronef et tenant compte des conditions opérationnelles et/ou atmosphériques, ladite masse d'air ambiante MA ayant un sens de déplacement par rapport à l'aéronef représenté par un vecteur W allant de l'amont vers l'aval, ledit aéronef (1) étant capable d'évoluer dans un domaine de vitesse subsonique et/ou transsonique et/ou supersonique, et ayant au moins un fuselage (2), au moins une couche limite CL environnant ledit aéronef laquelle a une épaisseur définie par un angle ALFA, ce dit angle ALFA étant défini entre la surface externe de l'aéronef (1) et une surface où l'écoulement est proche de l'écoulement relatif à l'infini amont, ledit aéronef (1) comprenant une structure faiblement élastique capable de se déformer légèrement en fonction des conditions opérationnelles et/ou atmosphériques comme par exemple en fonction des contraintes aérodynamiques et/ou mécaniques et/ou thermiques subies par ledit aéronef, ledit aéronef (1) étant capable de générer un bruit B lors de son déplacement et/ou de son fonctionnement dans la masse d'air ambiante MA, ledit aéronef (1) ayant un axe longitudinal OX, un axe latéral OY, un axe vertical OZ, constituant un repère orthonormé OXYZ, et comprenant :
- au moins deux générateurs d'ondes acoustiques GA1 et GA2 capables d'émettre chacun au moins un train d'onde acoustiques, lesdits générateurs GA1 et GA2 étant fixés sur la structure dudit aéronef (1) respectivement à une position G1 et G2 dans le repère OXYZ en suivant les légères déformations de ladite structure dudit l'aéronef (1), et
- au moins deux récepteurs d'ondes acoustiques RA1 et RA2 capables de recevoir chacun au moins un train d'onde émis par les générateurs d'ondes acoustiques GAI et/ou GA2, lesdits récepteurs RA1 et RA2 étant fixés sur la structure dudit aéronef (1) respectivement à une position R1 et R2 dans le repère OXYZ en suivant les légères déformations de ladite structure dudit aéronef (1), le récepteur RA1 étant situé à une distance D1 du générateur GA1 sur l'axe OX et à une distance H1 du générateur GA1 sur l'axe OZ, et le récepteur RA2 étant situé à une distance D2 du générateur GA2 sur l'axe OX et à une distance H2 du générateur GA2 sur l'axe OZ, les dits récepteurs RA1 et RA2 étant en outre situés respectivement en aval des générateurs GA1 et GA2,
**caractérisé en ce que** ledit dispositif comprend :
- au moins un moyen MC de mesure et de calcul, en temps réel, actif et automatique, de la vitesse anémométrique VA avec une précision absolue PAVA et une précision relative PRVA exprimée en pour cent telle que PRVA=100xPAVANA, ledit moyen MC comprenant simultanément :
∘ au moins un moyen MC1 de mesure du temps T1 de parcours du train d'onde entre le générateur GA1 et le récepteur RA1 et du temps T2 de parcours du train d'onde entre le générateur GA2 et le récepteur RA2, en suivant les légères déformations de la structure de l'aéronef (1), et
∘ au moins un moyen MC2 de mesure et/ou de calcul des positions G1, G2, R1, R2 et des distances G1R1 et G2R2 correspondant respectivement à la distance entre le générateur G1 et le récepteur R1 et à la distance entre le générateur G2 et le récepteur R2, en suivant les légères déformations de la structure de l'aéronef (1), et
∘ au moins un moyen de calcul MC3 de la vitesse anémométrique VA et de la vitesse du son VS en fonction de T1, T2, G1, G2, R1, R2 ou en fonction de T1, T2, G1R1, G2R2, en suivant les légères déformations de la structure de l'aéronef (1),
- et au moins un moyen ME de mesure et/ou de calcul, actif et automatique, de correction de la valeur de la vitesse anémométrique VA et éventuellement de la valeur de la vitesse du son VS en améliorant la précision absolue PAVA et/ou la précision relative PRVA exprimée en pour cent telle que PRVA=100xPAVANA, en fonction des conditions opérationnelles comme le bruit et/ou les contraintes aérodynamiques et/ou mécaniques et/ou thermiques subies par ledit aéronef (1),
lesdits moyens MC et ME étant en outre corrélés pour que chaque valeur de T1, T2, G1, G2, R1, R2 et/ou de T1, T2, G1R1, G2R2 mesurée corresponde à une et une seule valeur de VA, de PAVA et de PRVA.

2. Dispositif de mesure selon la revendication 1 **caractérisé en ce qu'**il comprend en outre au moins un générateur d'onde électromagnétique GE capable d'émettre un train d'onde électromagnétiques, ledit train d'onde ayant une fréquence adaptée à la réglementation aérienne et les performances requises, ladite fréquence étant comprise entre 1 GHz et 20 GHz de préférence, et au moins un récepteur d'ondes électromagnétiques RE capable de recevoir ledit train d'onde électromagnétique émis par ledit générateur GE, ledit générateur GE et récepteur RE étant fixés sur la structure dudit aéronef à une position E1 et E2 respectivement, en suivant les légères déformations de la structure dudit aéronef (1), ledit récepteur RE étant situé à une distance GERE du générateur GE de façon à mesurer la déformation relative de la structure dudit aéronef (1) en mesurant en temps réel le temps de parcours de l'onde électromagnétique, et ceci indépendamment de la vitesse avion.

3. Dispositif de mesure selon la revendication 1 ou 2 **caractérisé en ce que** le moyen ME comprend au moins un moyen ME1 de mesure et/ou de calcul et de régulation de la puissance PA1 et PA2 des trains d'ondes émis respectivement par lesdits générateurs acoustiques GA1 et GA2, ledit moyen ME1 mesurant en outre la puissance PB du bruit B générée dans les conditions opérationnelles et/ou par les contraintes aérodynamiques et/ou mécaniques et/ou thermiques subies par l'aéronef (1) dans la masse d'air ambiant MA, ledit moyen ME1 permettant en outre un pilotage actif de la puissance PA1 et/ou PA2 en fonction de la puissance PB du bruit B de façon à ce que le rapport PA1/PB et/ou PA2/PB soit toujours supérieur à une valeur prédéterminée Pd dépendant des conditions opérationnelles et/ou par les contraintes aérodynamiques et/ou mécaniques et/ou thermiques, de préférence supérieure à 0,7 ou à 1,2.

4. Dispositif de mesure selon la revendication 3 **caractérisé en ce que** lorsque la puissance PB acoustique du bruit B est inférieure à une valeur prédéterminée PBm (PB < P Bm) dépendant des conditions opérationnelles et/ou par les contraintes aérodynamiques et/ou mécaniques et/ou thermiques, par exemple 60 décibels, par exemple lorsque l'aéronef est à l'arrêt, alors la puissance émise par le générateur GA1 et/ou le générateur GA2 est inférieure ou égale à une valeur prédéterminée PGm par exemple 110 décibels, et lorsque la puissance PB du bruit B est supérieure à la valeur prédéterminée PBm (PB > PBm) la puissance acoustique émise par le générateur GA1 et/ou le générateur GA2 est égale à une valeur supérieure à ladite valeur prédéterminée PGm, par exemple 160 décibels, et **caractérisé en ce que** la puissance PB du bruit B est mesurée en un endroit où la puissance reçue des ondes acoustiques émises par le générateur GA1 et/ou GA2 est faible et/ou la puissance du bruit B est mesurée en un instant où la puissance des ondes émises par le générateur GA1 et/ou GA2 est faible ou nulle.

5. Dispositif de mesure selon l'une quelconque des revendications précédentes **caractérisé en ce que** le moyen ME comprend en outre, au moins, un moyen ME2 de mesure et de calcul de la fréquence FA1 et FA2 et/ou de l'impédance IA1 et IA2 des trains d'ondes acoustiques émis respectivement par les générateurs acoustiques GA1 et GA2 et de la fréquence FB et/ou de l'impédance IB du bruit B générée dans les conditions opérationnelles et/ou par les contraintes aérodynamiques et/ou mécaniques subies par l'aéronef (1) dans la masse d'air ambiant MA, ledit moyen ME2 permettant en outre un pilotage actif de la fréquence FA1 et/ou FA2 en fonction de la fréquence FB du bruit B de façon à ce que le rapport FA1/FB et/ou FA2/FB soit toujours supérieur à une valeur prédéterminée Fd, et/ou ledit moyen permettant en outre un pilotage de l'impédance IA1 et/ou IA2 en fonction de l'impédance IB du bruit B de façon à ce que le rapport IA1/IB et/ou IA2/IB soit toujours supérieur à une valeur prédéterminée Id.

6. Dispositif de mesure selon l'une quelconque des revendications précédentes **caractérisé en ce que** le moyen ME comprend en outre, au moins, un moyen ME3 de mesure et de calcul des écarts algébriques des positions PAG1 et PAG2 des générateurs GA1 et GA2 respectivement et/ou de l'écart algébrique des positions PAR1 et PAR2 des récepteurs RA1 et RA2 respectivement et/ou des écarts algébriques PAG1R1 et PAG2R2 des distances G1R1 et G2R2 respectivement, en fonction des conditions opérationnelles et/ou en fonction des contraintes aérodynamiques et/ou mécaniques subies par ledit aéronef (1) et **caractérisé en ce que** le moyen ME3 de mesure et de calcul calcule en outre, à partir de la vitesse VS du son, en utilisant les lois de correspondance tabulée reliant la vitesse du son et la température ambiante, une température TA de la masse d'air ambiant, puis en utilisant les lois de dilatations des matériaux et de la géométrie de l'aéronef, le moyen ME3 calcule les écarts PAGIR1 de la distance G1R1 et PAG2R2 de la distance G2R2 en fonction des conditions opérationnelles et/ou en fonction des contraintes aérodynamiques et/ou mécaniques subies par ledit aéronef (1), **caractérisé en ce que** le moyen ME3 de mesure et de calcul calcule en outre, à partir de la vitesse anémométrique VA et/ou de la pression atmosphérique, un écart algébrique PAP pour tenir compte de l'allongement de l'aéronef en fonction des forces de traînée appliquées sur les parties arrières de l'aéronef afin de déduire les écarts algébriques PAG1R1 de la distance G1R1 et PAG2R2 de la distance G2R2 en fonction des conditions opérationnelles et/ou en fonction des contraintes aérodynamiques et/ou mécaniques subies par ledit aéronef (1).

7. Dispositif de mesure selon l'une quelconque des revendications précédentes **caractérisé en ce que** ledit dispositif comprend en outre un moyen ME4 de mesure et de calcul du temps TEM de parcours de l'onde électromagnétique entre le générateur GE et le récepteur RE et la distance GERE entre le générateur GE et le récepteur RE en suivant les légères déformations de la structure de l'aéronef (1) de façon à obtenir l'écart algébrique PAGERE de la distance GERE et d'en déduire la correction algébrique PAG1R1 de la distance G1R1 et d'en déduire également la correction algébrique PAG2R2 de la distance G2R2 en fonction des conditions opérationnelles et/ou en fonction des contraintes aérodynamiques et/ou mécaniques subies par ledit aéronef (1).

8. Dispositif de mesure selon l'une quelconque des revendications précédentes, **caractérisé en ce que** les récepteurs RA1 et RA2 et/ou les générateurs GA1 et GA2 ont une surface d'au moins 16 millimètres carrés de façon à ce que, des déformations structurales subies par l'aéronef, dans les conditions opérationnelles et/ou sous les effets des contraintes aérodynamiques et/ou mécaniques, soient négligeables et n'empêchent pas les récepteurs RA1 et RA2 de recevoir les trains d'ondes émis par le générateur GA1 et/ou GA2 et **caractérisé en ce qu'**au moins un des générateurs acoustiques et/ou au moins un des récepteurs acoustiques soit placé en un point où les effets de déformations subis par l'aéronef sont sensiblement négligeables de façon à mesurer et calculer avec précision les distances séparant les autres générateurs acoustiques aux autres récepteurs acoustiques, et/ou de mesurer avec précision les positions des autres générateurs acoustiques et/ou autres récepteurs acoustiques.

9. Dispositif de mesure selon l'une quelconque des revendications précédentes, **caractérisé en ce qu'**il comprend au moins deux générateurs d'ondes électromagnétiques GE1 et GE2 fixés sur la structure dudit aéronef à une position E11 et E12 proche des générateurs GA1 et GA2 respectivement, notamment E11 coïncident avec G1 et/ou E12 coïncident avec G2, et/ou au moins deux récepteurs d'ondes électromagnétiques RE1 et RE2 fixés sur la structure dudit aéronef à une position E21 et E22 proche des récepteurs RA1 et RA2 respectivement, notamment E21 coïncident avec R1 et/ou E22 coïncident avec R2.

10. Dispositif de mesure selon l'une quelconque des revendications précédentes, **caractérisé en ce qu'**il comprend un générateur acoustique GA12 comprenant au moins deux générateurs acoustiques GA1, GA2 et/ou un récepteur acoustique RA12 comprenant au moins deux récepteurs acoustiques RA1, RA2.

11. Dispositif de mesure selon l'une quelconque des revendications précédentes, **caractérisé en ce qu'**il comprend au moins trois générateurs d'ondes acoustiques et/ou au moins trois récepteurs d'ondes acoustiques et éventuellement un moyen de mesure et de calcul de l'incidence anémométrique à partir des temps de parcours des ondes acoustiques de façon à obtenir une valeur précise de l'incidence et une meilleure précision sur la valeur de la vitesse VA à forte incidence.

12. Procédé pour la mise en œuvre du dispositif de mesure selon les revendications 1 à 4 dans lequel:
- au moins deux trains d'ondes sont émis respectivement par le générateur acoustique GA1 et GA2 en direction respectivement des récepteurs RA1 et RA2, le récepteur RAI reçoit au moins une onde émise par GAI et le récepteur RA2 reçoit au moins une onde émise par GA2,
- à partir du moyen MC1, on mesure les temps de parcours des trains d'ondes T1 et T2,
- à partir du moyen MC2, on mesure les positions G1, G2, R1, R2, et on calcule les distances G1R1 et G2R2,
- à partir du moyen MC3, on calcule, à partir des temps de parcours et des positions ou distances, la valeur de la vitesse avion VA et de la vitesse du son VS en fonction de T1, T2, G1, G2, R1, R2 et/ou en fonction de T1, T2, G1 R1, G2R2,
- à partir du moyen ME1, on mesure la valeur de la puissance PA1 et/ou PA2 des trains d'ondes émis par les générateurs acoustiques et la puissance PB du bruit B ambiant et on calcule le rapport PA1/PB et/ou PA2/PB,
- on vérifie :
∘ si le rapport PA1/PB et/ou PA2/PB est supérieur à la valeur Pd prédéterminée en fonction des conditions opérationnelles et/ou en fonction des contraintes aérodynamiques et/ou mécaniques subies par ledit aéronef (1) dans la masse d'air MA, on garde constante la valeur de la puissance PA1 et/ou PA2,
∘ si le rapport PA1/PB et/ou PA2/PB est inférieur ou égal à la valeur Pd, on augmente sensiblement la valeur de la puissance PA1 et/ou PA2 de façon à obtenir un rapport PA1/PB et/ou PA2/PB supérieur à Pd,
- on corrige la valeur de la vitesse anémométrique VA et de la vitesse du son VS en fonction de T1, T2, G1, G2, R1, R2 ou en fonction de T1, T2, G1R1, G2R2 pour la valeur de puissance PA1 et/ou PA2,
- on calcule la précision absolue PAVA et/ou la précision relative PRVA exprimée en pour cent tel que PRVA=100xPAVANA, en fonction des conditions opérationnelles et/ou en fonction des contraintes aérodynamiques et/ou mécaniques subies par ledit aéronef (1) pour la valeur de puissance PA1 et/ou PA2.

13. Procédé selon la revendication 12 pour la mise en œuvre du dispositif de mesure selon les revendications 1 à 5 dans lequel:
- à partir du moyen ME2 on mesure la fréquence FA1 et/ou FA2 des trains d'ondes acoustiques émis par les générateurs acoustiques et la fréquence FB du bruit B ambiant, et on calcule le rapport des fréquences FA1/FB et/ou FA2/FB,
- on vérifie :
∘ si le rapport FA1/FB et/ou FA2/FB est supérieur Fd, alors on garde constante les valeurs de FA1 et/ou de FA2,
∘ si le rapport FA1/FB et/ou FA2/FB est inférieur ou égal à Fd, on augmente sensiblement la valeur de la fréquence FA1 et/ou de FA2 de façon à obtenir un rapport FA1/FB et/ou FA2/FB supérieur à Fd,
- on calcule la nouvelle valeur de la vitesse avion VA et de la vitesse du son VS en fonction de T1, T2, G1, G2, R1, R2 ou en fonction de T1, T2, G1R1, G2R2 pour la valeur de la fréquence FA1 et/ou FA2 ;
- on calcule la précision absolue PAVA et/ou la précision relative PRVA exprimée en pour cent tel que PRVA=100xPAVA/VA, en fonction des conditions opérationnelles et/ou en fonction des contraintes aérodynamiques et/ou mécaniques subies par ledit aéronef (1) pour la valeur de la fréquence FA1 et/ou FA2.

14. Procédé selon l'une des revendications 12 ou 13 pour la mise en œuvre du dispositif de mesure selon les revendications 1 à 5, dans lequel:
- à partir du moyen ME2 on mesure l'impédance IA1 et/ou IA2 des trains d'ondes acoustiques émis par les générateurs acoustiques et l'impédance IB du bruit B ambiant, et on calcule le rapport des impédances IA1/IB et/ou IA2/IB,
- on vérifie :
∘ si le rapport IA1/IB et/ou IA2/IB est supérieur à Id, alors on garde constante les valeurs de IA1 et/ou de IA2,
∘ si le rapport IA1/IB et/ou IA2/IB est inférieur ou égal à Id, on augmente sensiblement la valeur de la fréquence IA1 et/ou de IA2 de façon à obtenir un rapport IA1/IB et/ou IA2/IB supérieur à Id respectivement,
- on calcule la nouvelle valeur de la vitesse avion VA et de la vitesse du son VS en fonction de T1, T2, G1, G2, RI, R2 et/ou en fonction de T1, T2, G1R1, G2R2 pour la valeur de la fréquence IA1 et/ou IA2,
- on calcule la précision absolue PAVA et/ou la précision relative PRVA exprimée en pour cent tel que PRVA=100xPAVA/VA, en fonction des conditions opérationnelles et/ou en fonction des contraintes aérodynamiques et/ou mécaniques subies par ledit aéronef (1) pour la valeur de la fréquence IA1 et/ou IA2.

15. Procédé selon la revendication 12 pour la mise en œuvre du dispositif de mesure selon les revendications 1 à 4 et 6, dans lequel :
- on mesure les positions G1 et G2 des générateurs GAI et GA2 et/ou les nouvelles positions R1 et R2 des récepteurs RA1 et RA2 et/ou les nouvelles distances G1R1 et G2R2, en fonction des conditions opérationnelles et/ou en fonction des contraintes aérodynamiques et/ou mécaniques subies par ledit aéronef (1),
- à partir du moyen ME3, on calcule les écarts algébriques PAG1 et PAG2 des positions des générateurs GA1 et GA2 respectivement et/ou les écarts algébriques PAR1 et PAR2 des positions des récepteurs RA1 et RA2 et/ou les écarts algébriques PAG1R1 et PAG2R2 des distances G1R1 et G2R2 respectivement en fonction des conditions opérationnelles et/ou en fonction des contraintes aérodynamiques et/ou mécaniques subies par ledit aéronef (1),
- on calcule la valeur de la vitesse avion VA et de la vitesse du son VS en fonction de T1, T2, G1, G2, R1, R2 ou en fonction de T1, T2, G1R1, G2R2 en intégrant les corrections PAG1, PAG2 et/ou PAR1, PAR2 des positions G1, G2, R1, R2 respectivement et/ou les corrections PAG1R1, PAG2R2, des distances G1R1, G2R2 respectivement,
- on calcule la précision absolue PAVA et/ou la précision relative PRVA exprimée en pour cent tel que PRVA=100xPAVA/VA, en fonction des conditions opérationnelles et/ou en fonction des contraintes aérodynamiques et/ou mécaniques subies par ledit aéronef (1) pour les valeurs de PAG1, PAG2 et/ou PAR1, PAR2 et/ou la PAG1R1, PAG2R2.

16. Procédé selon la revendication 12 pour la mise en œuvre du dispositif de mesure selon les revendications 1 à 7, dans lequel :
- à partir du moyen ME4, pour une condition opérationnelle et/ou des contraintes aérodynamiques et/ou mécaniques subies par ledit aéronef (1) noté C01, on mesure le temps TEM de parcours de l'onde électromagnétique entre le générateur GE et le récepteur RE et on calcule la distance GERE,
- pour une condition opérationnelle et/ou des contraintes aérodynamiques et/ou mécaniques subies par ledit aéronef (1) noté CO2, on mesure un nouveau temps TEM de parcours de l'onde électromagnétique entre le générateur GE et le récepteur RE et on calcule la nouvelle distance NGERE,
- on compare la nouvelle distance NGERE avec la distance GERE et on déduit l'écart algébrique PAGERE = NGERE - GERE de la distance entre GE et RE,
- on calcule la valeur de la vitesse avion VA et de la vitesse du son VS en fonction de T1, T2, G1, G2, RI, R2 et/ou en fonction de T1, T2, G1R1, G2R2 en intégrant la correction PAGERE aux valeurs des distances G1R1, G2R2 pour une condition opérationnelle et/ou des contraintes aérodynamiques et/ou mécaniques subies par ledit aéronef (1) noté CO2, on déduit un écart algébrique PAG1R1 de la distance G1R1 et un écart algébrique PAG2R2 de la distance G2R2,
- après plusieurs itérations on obtient les valeurs précises de VA, VS, en fonction des conditions opérationnelles et/ou en fonction des contraintes aérodynamiques et/ou mécaniques subies par ledit aéronef (1) CO2 pour la valeur PAGERE obtenue,
- on calcule en outre, à partir de la vitesse VS du son, une température TA de la masse d'air ambiante et un écart PATA de ladite température déterminée à partir d'une corrélation entre la vitesse du son et les règles de correspondance entre la vitesse du son et la température,
- on déduit l'écart algébrique PAG1R1 de la distance G1R1 et l'écart algébrique PAG2R2 de la distance G2R2 en fonction des conditions opérationnelles et/ou en fonction des contraintes aérodynamiques et/ou mécaniques subies par ledit aéronef (1),
- on calcule la valeur de la vitesse avion VA et de la vitesse du son VS en fonction de T1, T2, G1, G2, R1, R2 ou en fonction de T1, T2, G1R1, G2R2 pour les écarts algébriques PAG1R1 de la distance G1R1 et PAG2R2 de la distance G2R2,
- on calcule la précision absolue PAVA et/ou la précision relative PRVA exprimée en pour cent telle que PRVA=100xPAVA/VA, en fonction des conditions opérationnelles et/ou en fonction des contraintes aérodynamiques et/ou mécaniques subies par ledit aéronef (1) pour les valeurs l'écart algébrique PAG1R1 de la distance G1R1 et l'écart algébrique PAG2R2 de la distance G2R2 obtenue.

## Patentansprüche

1. Messvorrichtung, die in Echtzeit mit höchster Genauigkeit die anemometrische Geschwindigkeit VA eines Flugzeugs (1) relativ zu einer das Flugzeug umgebenden Umgebungsluftmasse MA unter Berücksichtigung der Einsatz- und/oder atmosphärischen Bedingungen misst, wobei die Umgebungsluftmasse MA eine Bewegungsrichtung relativ zum Flugzeug aufweist, die durch einen Vektor W dargestellt wird, der von vorne nach hinten verläuft, wobei das Flugzeug (1) in einem Unterschall- und/oder Transschall- und/oder Überschallgeschwindigkeitsbereich fliegen kann und mindestens einen Rumpf (2) aufweist, wobei mindestens eine Grenzschicht CL das Flugzeug umgibt, die eine durch einen Winkel ALFA definierte Dicke aufweist, wobei der Winkel ALFA zwischen der Außenfläche des Flugzeugs (1) und einer Fläche definiert ist, an der die Strömung vorne nahe der relativen Strömung im Unendlichen ist, wobei das Flugzeug (1) eine schwach elastische Struktur umfasst, die sich in Abhängigkeit von den Einsatz- und/oder atmosphärischen Bedingungen, wie zum Beispiel in Abhängigkeit von den aerodynamischen und/oder mechanischen und/oder thermischen Beanspruchungen, denen das Flugzeug ausgesetzt ist, leicht verformen kann, wobei das Flugzeug (1) während seiner Bewegung und/oder seines Betriebs in der umgebenden Luftmasse MA ein Rauschen B erzeugen kann, wobei das Flugzeug (1) eine Längsachse OX, eine Seitenachse OY, eine vertikale Achse OZ aufweist, die ein orthonormales OXYZ-Bezugssystem bilden, und umfassend:
- mindestens zwei Schallwellengeneratoren GA1 und GA2, die jeweils mindestens einen Schallwellenzug aussenden können, wobei die Generatoren GA1 und GA2 an der Struktur des Flugzeugs (1) jeweils an einer Position G1 bzw. G2 im OXYZ-Bezugssystem befestigt sind, indem sie den leichten Verformungen der Struktur des Flugzeugs (1) folgen, und
- mindestens zwei Schallwellenempfänger RA1 und RA2, die jeweils mindestens einen von den Schallwellengeneratoren GA1 und/oder GA2 ausgesendeten Wellenzug empfangen können, wobei die Empfänger RA1 und RA2 an der Struktur des Flugzeugs (1) an einer Position R1 bzw. R2 im OXYZ-Bezugssystem befestigt sind, indem sie den leichten Verformungen der Struktur des Flugzeugs (1) folgen, wobei der Empfänger RA1 in einem Abstand D1 zum Generator GA1 auf der OX-Achse und in einem Abstand H1 zum Generator GA1 auf der OZ-Achse angeordnet ist, und der Empfänger RA2 in einem Abstand D2 zum Generator GA2 auf der OX-Achse und in einem Abstand H2 zum Generator GA2 auf der OZ-Achse angeordnet ist, wobei die Empfänger RA1 und RA2 außerdem jeweils hinter den Generatoren GA1 und GA2 angeordnet sind,
**dadurch gekennzeichnet, dass** die Vorrichtung umfasst:
- mindestens ein Mittel MC, um aktiv und automatisch die anemometrische Geschwindigkeit VA mit einer absoluten Genauigkeit PAVA und einer relativen Genauigkeit PRVA in Echtzeit zu messen und zu berechnen, die in Prozent ausgedrückt wird, wie zum Beispiel PRVA=100xPAVANA, wobei das Mittel MC gleichzeitig umfasst:
o mindestens ein Mittel MC1, um die Zeit T1 des Durchlaufs des Wellenzugs zwischen dem Generator GA1 und dem Empfänger RA1 und die Zeit T2 des Durchlaufs des Wellenzugs zwischen dem Generator GA2 und dem Empfänger RA2 zu messen, und zwar durch Verfolgen der leichten Verformungen der Struktur des Flugzeugs (1), und
o mindestens ein Mittel MC2 zum Messen und/oder Berechnen der Positionen G1, G2, R1, R2 und der Abstände G1R1 und G2R2, die jeweils dem Abstand zwischen dem Generator G1 und dem Empfänger R1 bzw. dem Abstand zwischen dem Generator G2 und dem Empfänger R2 entsprechen, und zwar durch Verfolgen der leichten Verformungen der Flugzeugstruktur (1), und
o mindestens ein Mittel MC3 zum Berechnen der anemometrischen Geschwindigkeit VA und der Schallgeschwindigkeit VS in Abhängigkeit von T1, T2, G1, G2, R1, R2 oder in Abhängigkeit von T1, T2, G1R1, G2R2, und zwar durch Verfolgen der leichten Verformungen der Flugzeugstruktur (1),
- und mindestens ein Mittel ME zur aktiven und automatischen Messung und/oder Berechnung zur Korrektur des Wertes der anemometrischen Geschwindigkeit VA und ggf. des Wertes der Schallgeschwindigkeit VS durch Verbesserung der absoluten Genauigkeit PAVA und/oder der in Prozent ausgedrückten relativen Genauigkeit PRVA, wie zum Beispiel PRVA=100xPAVANA, in Abhängigkeit der Einsatzbedingungen wie dem Rauschen und/oder den aerodynamischen und/oder mechanischen und/oder thermischen Beanspruchungen, denen das Flugzeug (1) ausgesetzt ist, wobei die MC- und ME-Mittel außerdem so korreliert werden, dass jeder gemessene Wert von T1, T2, G1, G2, R1, R2 und/oder von T1, T2, G1R1, G2R2 einem und nur einem einzigen Wert von VA, PAVA und PRVA entspricht.

2. Messvorrichtung nach Anspruch 1, **dadurch gekennzeichnet, dass** sie ferner mindestens einen Generator für elektromagnetische Wellen GE umfasst, der einen elektromagnetischen Wellenzug aussenden kann, wobei der Wellenzug eine an die Luftfahrtvorschriften und die geforderte Leistung angepasste Frequenz aufweist, wobei die Frequenz vorzugsweise zwischen 1 GHz und 20 GHz liegt, und mindestens einen Empfänger für elektromagnetische Wellen RE, der die vom Generator GE ausgesendeten elektromagnetischen Wellenzug empfangen kann, wobei der Generator GE und der Empfänger RE an der Struktur des Flugzeugs an einer Position E1 bzw. E2 befestigt sind, die den leichten Verformungen der Struktur des Flugzeugs (1) folgen, wobei der Empfänger RE in einem Abstand GERE zum Generator GE angeordnet ist, um die relative Verformung der Struktur des Flugzeugs (1) zu messen, indem die Durchlaufzeit der elektromagnetischen Welle in Echtzeit gemessen wird, und zwar unabhängig von der Flugzeuggeschwindigkeit.

3. Messvorrichtung nach Anspruch 1 oder 2, **dadurch gekennzeichnet, dass** das Mittel ME mindestens ein Mittel ME1 zum Messen und/oder Berechnen und Regeln der Leistung PA1 und PA2 der jeweils von den Schallgeneratoren GA1 und GA2 ausgesendeten Wellenzüge umfasst, wobei das Mittel ME1 auch die Leistung PB des Rauschens B misst, das unter den Einsatzbedingungen und/oder durch die aerodynamischen und/oder mechanischen und/oder thermischen Beanspruchungen des Flugzeugs (1) in der Umgebungsluftmasse MA erzeugt wird, wobei das Mittel ME1 ferner eine aktive Steuerung der Leistung PA1 und/oder PA2 in Abhängigkeit von der Leistung PB des Rauschens B ermöglicht, so dass das Verhältnis PA1/PB und/oder PA2/PB stets größer als ein vorbestimmter Wert Pd ist, der von den Einsatzbedingungen und/oder von den aerodynamischen und/oder mechanischen und/oder thermischen Beanspruchungen abhängt, vorzugsweise größer als 0,7 oder 1,2.

4. Messvorrichtung nach Anspruch 3, **dadurch gekennzeichnet, dass** wenn die Schallleistung PB des Rauschens B in Abhängigkeit von den Einsatzbedingungen und/oder von den aerodynamischen und/oder mechanischen und/oder thermischen Beanspruchungen kleiner als ein vorgegebener Wert PBm (PB < P Bm) ist, beispielsweise 60 Dezibel, beispielsweise wenn das Flugzeug steht, die vom Generator GA1 und/oder Generator GA2 ausgesendete Leistung kleiner als oder gleich einem vorgegebenen Wert PGm ist, beispielweise 110 Dezibel, und wenn die Leistung PB des Rauschens B größer als der vorbestimmte Wert PBm (PB > PBm) ist, die vom Generator GA1 und/oder dem Generator GA2 ausgesendete Schallleistung gleich einem Wert ist, der größer als der vorbestimmte Wert PGm ist, beispielsweise 160 Dezibel, und **dadurch gekennzeichnet, dass** die Leistung PB des Rauschens B an einem Ort gemessen wird, an dem die empfangene Leistung der vom Generator GA1 und/oder GA2 ausgesendeten Schallwellen schwach ist und/oder die Leistung des Rauschens B zu einem Zeitpunkt gemessen wird, an dem die Leistung der vom Generator GA1 und/oder GA2 ausgesendeten Wellen schwach oder null ist.

5. Messvorrichtung nach einem der vorhergehenden Ansprüche, **dadurch gekennzeichnet, dass** das Mittel ME ferner mindestens ein Mittel ME2 zum Messen und Berechnen der Frequenz FA1 und FA2 und/oder der Impedanz IA1 und IA2 der jeweils von den Schallgeneratoren GA1 und GA2 ausgesendeten Schallwellenzüge und der Frequenz FB und/oder der Impedanz IB des unter den Einsatzbedingungen und/oder durch die aerodynamischen und/oder mechanischen Beanspruchungen des Flugzeugs (1) in der Umgebungsluftmasse MA erzeugten Rauschens B umfasst, wobei das Mittel ME2 außerdem eine aktive Steuerung der Frequenz FA1 und/oder FA2 in Abhängigkeit von der Frequenz FB des Rauschens B ermöglicht, so dass das Verhältnis FA1/FB und/oder FA2/FB immer größer als ein vorbestimmter Wert Fd ist, und/oder das Mittel ferner eine Steuerung der Impedanz IA1 und/oder IA2 in Abhängigkeit von der Impedanz IB des Rauschens B ermöglicht, so dass das Verhältnis IA1/IB und/oder IA2/IB immer größer als ein vorbestimmter Wert Id ist.

6. Messvorrichtung nach einem der vorhergehenden Ansprüche, **dadurch gekennzeichnet, dass** das Mittel ME in Abhängigkeit von den Einsatzbedingungen und/oder in Abhängigkeit von den aerodynamischen und/oder mechanischen Beanspruchungen, denen das Flugzeug (1) ausgesetzt ist, weiterhin mindestens ein Mittel ME3 zum Messen und Berechnen der algebraischen Abweichungen der Positionen PAG1 und PAG2 der Generatoren GA1 bzw. GA2 und/oder der algebraischen Abweichung der Positionen PAR1 und PAR2 der Empfänger RA1 bzw. RA2 und/oder der algebraischen Abweichungen PAG1R1 und PAG2R2 der Abstände G1R1 bzw. G2R2 umfasst, und **dadurch gekennzeichnet, dass** das Mittel zum Messen und Berechnen ME3 außerdem aus der Schallgeschwindigkeit VS unter Verwendung der tabellierten Korrespondenzgesetze, die die Schallgeschwindigkeit und die Umgebungstemperatur miteinander verbinden, eine Temperatur TA der Umgebungsluftmasse berechnet, woraufhin das Mittel ME3 unter Verwendung der Ausdehnungsgesetze der Materialien und der Geometrie des Flugzeugs die Abweichungen PAGIR1 vom Abstand G1R1 und PAG2R2 vom Abstand G2R2 in Abhängigkeit von den Einsatzbedingungen und/oder in Abhängigkeit von den aerodynamischen und/oder mechanischen Beanspruchungen, denen das Flugzeug (1) ausgesetzt ist, berechnet, **dadurch gekennzeichnet, dass** das Mittel ME3 zum Messen und Berechnen ferner aus der anemometrischen Geschwindigkeit VA und/oder dem atmosphärischen Druck, eine algebraische Abweichung PAP berechnet, um die Dehnung des Flugzeugs in Abhängigkeit von den auf die hinteren Teile des Flugzeugs wirkenden Luftwiderstandskräften zu berücksichtigen, um die algebraischen Abweichungen PAG1R1 vom Abstand G1R1 und PAG2R2 vom Abstand G2R2 in Abhängigkeit von den Einsatzbedingungen und/oder in Abhängigkeit von den aerodynamischen und/oder mechanischen Beanspruchungen, denen das Flugzeug (1) ausgesetzt ist, abzuleiten.

7. Messvorrichtung nach einem der vorhergehenden Ansprüche, **dadurch gekennzeichnet, dass** die Vorrichtung außerdem ein Mittel ME4 zum Messen und Berechnen der Durchlaufzeit TEM der elektromagnetischen Welle zwischen dem Generator GE und dem Empfänger RE und des Abstandes GERE zwischen dem Generator GE und dem Empfänger RE umfasst, wobei die leichten Verformungen der Struktur des Flugzeugs (1) derart verfolgt werden, dass die algebraische Abweichung PAGERE von dem Abstand GERE erhalten wird und daraus die algebraische Korrektur PAG1R1 von dem Abstand G1R1 abgeleitet wird sowie daraus die algebraische Korrektur PAG2R2 von dem Abstand G2R2 in Abhängigkeit von den Betriebsbedingungen und/oder in Abhängigkeit von den aerodynamischen und/oder mechanischen Beanspruchungen, denen das Flugzeug (1) ausgesetzt ist, abgeleitet wird.

8. Messeinrichtung nach einem der vorhergehenden Ansprüche, **dadurch gekennzeichnet, dass** die Empfänger RA1 und RA2 und/oder die Generatoren GA1 und GA2 eine Fläche von mindestens 16 Quadratmillimetern aufweisen, so dass strukturelle Verformungen, die das Flugzeug unter Einsatzbedingungen und/oder unter Einwirkung aerodynamischer und/oder mechanischer Beanspruchungen erfährt, vernachlässigbar sind und die Empfänger RA1 und RA2 nicht daran hindern, die vom Generator GA1 und/oder GA2 ausgesendeten Wellenzüge zu empfangen, und **dadurch gekennzeichnet, dass** mindestens einer der Schallgeneratoren und/oder mindestens einer der Schallempfänger an einem Punkt angeordnet ist, an dem die Auswirkungen von Verformungen, denen das Flugzeug ausgesetzt ist, im Wesentlichen vernachlässigbar sind, um die Abstände, die die anderen Schallgeneratoren von den anderen Schallempfängern trennen, genau zu messen und zu berechnen und/oder um die Positionen der anderen Schallgeneratoren und/oder der anderen Schallempfänger genau zu messen.

9. Messvorrichtung nach einem der vorhergehenden Ansprüche, **dadurch gekennzeichnet, dass** sie mindestens zwei Generatoren für elektromagnetische Wellen GE1 und GE2 umfasst, die an der Struktur des Flugzeugs an einer Position E11 und E12 in der Nähe der Generatoren GA1 bzw. GA2 befestigt sind, insbesondere E11 mit G1 zusammenfällt und/oder E12 mit G2 zusammenfällt, und/oder mindestens zwei Empfänger für elektromagnetische Wellen RE1 und RE2, die an der Struktur des Flugzeugs an einer Position E21 und E22 in der Nähe der Empfänger RA1 bzw. RA2 befestigt sind, insbesondere E21 mit R1 zusammenfällt und/oder E22 mit R2 zusammenfällt.

10. Messvorrichtung nach einem der vorhergehenden Ansprüche, **dadurch gekennzeichnet, dass** sie einen Schallgenerator GA12 umfasst, der mindestens zwei Schallgeneratoren GA1, GA2 und/oder einen Schallempfänger RA12 umfasst, der mindestens zwei Schallempfänger RA1, RA2 umfasst.

11. Messvorrichtung nach einem der vorhergehenden Ansprüche, **dadurch gekennzeichnet, dass** sie mindestens drei Schallwellengeneratoren und/oder mindestens drei Schallwellenempfänger und gegebenenfalls ein Mittel zum Messen und Berechnen der anemometrischen Inzidenz aus den Durchlaufzeiten der Schallwellen umfasst, um einen genauen Wert der Inzidenz und eine bessere Genauigkeit des Wertes der Geschwindigkeit VA bei hoher Inzidenz zu erhalten.

12. Verfahren zur Ausführung der Messvorrichtung nach einem der Ansprüche 1 bis 4, wobei:
- mindestens zwei Wellenzüge vom Schallgenerator GA1 bzw. GA2 in Richtung der Empfänger RA1 bzw. RA2 ausgesendet werden, der Empfänger RAI mindestens eine vom GAI ausgesendete Welle empfängt und der Empfänger RA2 mindestens eine vom GA2 ausgesendete Welle empfängt,
- die Laufzeiten der Wellenzüge T1 und T2 über das Mittel MC1 gemessen werden,
- über das Mittel MC2 die Positionen G1, G2, R1, R2 gemessen und die Abstände G1R1 und G2R2 berechnet werden,
- über das Mittel MC3 der Wert der Flugzeuggeschwindigkeit VA und der Schallgeschwindigkeit VS aus den Durchlaufzeiten und Positionen bzw. Abständen in Abhängigkeit von T1, T2, G1, G2, R1, R2 und/oder in Abhängigkeit von T1, T2, G1 R1, G2R2 berechnet wird,
- über das Mittel ME1 der Wert der Leistung PA1 und/oder PA2 der von den Schallgeneratoren ausgesendeten Wellenzüge und die Leistung PB des Umgebungsrauschens B gemessen werden und das Verhältnis PA1/PB und/oder PA2/PB berechnet wird,
- Folgendes überprüft wird, wobei:
∘ wenn das Verhältnis PA1/PB und/oder PA2/PB größer ist als der Wert Pd, der in Abhängigkeit von den Einsatzbedingungen und/oder in Abhängigkeit von den aerodynamischen und/oder mechanischen Beanspruchungen des Flugzeugs (1) in der Luftmasse MA vorgegeben ist, der Wert der Leistung PA1 und/oder PA2 konstant gehalten wird,
∘ wenn das Verhältnis PA1/PB und/oder PA2/PB kleiner oder gleich dem Wert Pd ist, der Wert der Leistung PA1 und/oder PA2 wesentlich erhöht wird, um ein Verhältnis PA1/PB und/oder PA2/PB größer als Pd zu erhalten,
- der Wert der anemometrischen Geschwindigkeit VA und der Schallgeschwindigkeit VS in Abhängigkeit von T1, T2, G1, G2, R1, R2 oder in Abhängigkeit von T1, T2, G1R1, G2R2 für den Leistungswert PA1 und/oder PA2 korrigiert wird,
- die absolute Genauigkeit PAVA und/oder die relative Genauigkeit PRVA, die in Prozent ausgedrückt wird, wie zum Beispiel PRVA=100xPAVANA, in Abhängigkeit von den Einsatzbedingungen und/oder in Abhängigkeit von den aerodynamischen und/oder mechanischen Beanspruchungen, denen das Flugzeug (1) ausgesetzt ist, für den Leistungswert PA1 und/oder PA2 berechnet wird.

13. Verfahren nach Anspruch 12 zum Ausführen der Messvorrichtung nach einem der Ansprüche 1 bis 5, wobei:
- über das Mittel ME2 die Frequenz FA1 und/oder FA2 der von den Schallgeneratoren ausgesendeten Schallwellenzüge und die Frequenz FB des Umgebungsrauschens B gemessen werden und das Verhältnis der Frequenzen FA1/FB und/oder FA2/FB berechnet wird,
- Folgendes überprüft wird, wobei:
∘ wenn das Verhältnis FA1/FB und/oder FA2/FB größer als Fd ist, die Werte von FA1 und/oder FA2 konstant gehalten werden,
∘ wenn das Verhältnis FA1/FB und/oder FA2/FB kleiner oder gleich Fd ist, der Wert der Frequenz FA1 und/oder FA2 wesentlich erhöht wird, um ein Verhältnis FA1/FB und/oder FA2/FB größer als Fd zu erhalten,
- der neue Wert der Flugzeuggeschwindigkeit VA und der Schallgeschwindigkeit VS in Abhängigkeit von T1, T2, G1, G2, R1, R2 oder in Abhängigkeit von T1, T2, G1R1, G2R2 für den Wert der Frequenz FA1 und/oder FA2 berechnet wird;
- die absolute Genauigkeit PAVA und/oder die relative Genauigkeit PRVA, die in Prozent ausgedrückt wird, wie zum Beispiel PRVA=100xPAVA/VA, in Abhängigkeit von den Einsatzbedingungen und/oder in Abhängigkeit von den aerodynamischen und/oder mechanischen Beanspruchungen, denen das Flugzeug (1) ausgesetzt ist, für den Wert der Frequenz FA1 und/oder FA2 berechnet wird.

14. Verfahren nach einem der Ansprüche 12 oder 13 zum Ausführen der Messvorrichtung nach einem der Ansprüche 1 bis 5, wobei:
- über das Mittel ME2 die Impedanz IA1 und/oder IA2 der von den Schallgeneratoren ausgesendeten Schallwellenzüge und die Impedanz IB des Umgebungsrauschens B gemessen werden und das Verhältnis der Impedanzen IA1/IB und/oder IA2/IB berechnet wird,
- Folgendes überprüft wird, wobei:
∘ wenn das Verhältnis IA1/IB und/oder IA2/IB größer als Id ist, die Werte von IA1 und/oder IA2 konstant gehalten werden,
∘ wenn das Verhältnis IA1/IB und/oder IA2/IB kleiner oder gleich Id ist, der Wert der Frequenz IA1 und/oder IA2 wesentlich erhöht wird, um ein Verhältnis IA1/IB und/oder IA2/IB zu erhalten, das jeweils größer als Id ist,
- der neue Wert der Flugzeuggeschwindigkeit VA und der Schallgeschwindigkeit VS in Abhängigkeit von T1, T2, G1, G2, RI, R2 und/oder in Abhängigkeit von T1, T2, G1R1, G2R2 für den Wert der Frequenz IA1 und/oder IA2 berechnet wird,
- die absolute Genauigkeit PAVA und/oder die relative Genauigkeit PRVA, die in Prozent ausgedrückt wird, wie zum Beispiel PRVA=100xPAVA/VA, in Abhängigkeit der Einsatzbedingungen und/oder in Abhängigkeit der aerodynamischen und/oder mechanischen Beanspruchungen, denen das Flugzeug (1) ausgesetzt ist, für den Wert der Frequenz IA1 und/oder IA2 berechnet wird.

15. Verfahren nach Anspruch 12 zum Ausführen der Messvorrichtung nach einem der Ansprüche 1 bis 4 und 6, wobei:
- die Positionen G1 und G2 der Generatoren GAI und GA2 und/oder die neuen Positionen R1 und R2 der Empfänger RA1 und RA2 und/oder die neuen Abstände G1R1 und G2R2 in Abhängigkeit von den Einsatzbedingungen und/oder in Abhängigkeit von den aerodynamischen und/oder mechanischen Beanspruchungen gemessen werden, denen das Flugzeug (1) ausgesetzt ist,
- über das Mittel ME3 die algebraischen Abweichungen PAG1 und PAG2 der Positionen der Generatoren GA1 bzw. GA2 und/oder die algebraischen Abweichungen PAR1 und PAR2 der Positionen der Empfänger RA1 und RA2 und/oder die algebraischen Abweichungen PAG1R1 und PAG2R2 der Abstände G1R1 bzw. G2R2 in Abhängigkeit von den Einsatzbedingungen und/oder in Abhängigkeit von den aerodynamischen und/oder mechanischen Beanspruchungen berechnet werden, denen das Flugzeug (1) ausgesetzt ist,
- der Wert der Flugzeuggeschwindigkeit VA und der Schallgeschwindigkeit VS in Abhängigkeit von T1, T2, G1, G2, R1, R2 oder in Abhängigkeit von T1, T2, G1R1, G2R2 durch Integration der Korrekturen PAG1, PAG2 und/oder PAR1, PAR2 der Positionen G1, G2, R1, R2 bzw. der Korrekturen PAG1R1, PAG2R2 der Abstände G1R1, G2R2 berechnet wird,
- die absolute Genauigkeit PAVA und/oder die relative Genauigkeit PRVA, die in Prozent ausgedrückt wird, wie zum Beispiel PRVA=100xPAVA/VA, in Abhängigkeit der Einsatzbedingungen und/oder als in Abhängigkeit der aerodynamischen und/oder mechanischen Beanspruchungen, denen das Flugzeug (1) ausgesetzt ist, für die Werte von PAG1, PAG2 und/oder PAR1, PAR2 und/oder PAG1R1, PAG2R2 berechnet wird.

16. Verfahren nach Anspruch 12 zum Ausführen der Messvorrichtung nach einem der Ansprüche 1 bis 7, wobei:
- über das Mittel ME4 für eine Einsatzbedingung und/oder aerodynamische und/oder mechanische Beanspruchungen, denen das Flugzeug (1) ausgesetzt ist, mit der Bezeichnung C01 die Durchlaufzeit TEM der elektromagnetischen Welle zwischen dem Generator GE und dem Empfänger RE gemessen und der Abstand GERE berechnet wird,
- für eine Einsatzbedingung und/oder aerodynamische und/oder mechanische Beanspruchungen, denen das Flugzeug (1) ausgesetzt ist, mit der Bezeichnung CO2, eine neue Durchlaufzeit TEM der elektromagnetischen Welle zwischen dem Generator GE und dem Empfänger RE gemessen und der neue Abstand NGERE berechnet wird,
- der neue Abstand NGERE mit dem Abstand GERE verglichen wird und die algebraische Abweichung PAGERE = NGERE - GERE des Abstands zwischen GE und RE abgeleitet wird,
- der Wert der Flugzeuggeschwindigkeit VA und der Schallgeschwindigkeit VS in Abhängigkeit von T1, T2, G1, G2, R1, R2 und/oder in Abhängigkeit von T1, T2, G1R1, G2R2 durch Integration der PAGERE-Korrektur in die Werte der Abstände G1R1, G2R2 berechnet wird, und für eine Einsatzbedingung und/oder aerodynamische und/oder mechanische Beanspruchungen, denen das Flugzeug (1) ausgesetzt ist, mit der Bezeichnung CO2, eine algebraische Abweichung PAG1R1 von dem Abstand G1R1 und eine algebraische Abweichung PAG2R2 von dem Abstand G2R2 abgeleitet werden,
- nach mehreren Iterationen die genauen Werte von VA, VS in Abhängigkeit von den Einsatzbedingungen und/oder in Abhängigkeit von den aerodynamischen und/oder mechanischen Beanspruchungen, denen das Flugzeug (1) ausgesetzt ist, mit der Bezeichnung CO2, für den erhaltenen PAGERE-Wert erhalten werden,
- ferner ausgehend von der Schallgeschwindigkeit VS eine Temperatur TA der Umgebungsluftmasse und eine aus einer Korrelation zwischen der Schallgeschwindigkeit VS und den Korrespondenzregeln zwischen der Schallgeschwindigkeit und der Temperatur ermittelte Abweichung PATA der genannten Temperatur berechnet wird,
- die algebraische Abweichung PAG1R1 von dem Abstand G1R1 und die algebraische Abweichung PAG2R2 von dem Abstand G2R2 in Abhängigkeit von den Einsatzbedingungen und/oder in Abhängigkeit von den aerodynamischen und/oder mechanischen Beanspruchungen, denen das Flugzeug (1) ausgesetzt ist, abgeleitet werden,
- der Wert der Flugzeuggeschwindigkeit VA und der Schallgeschwindigkeit VS in Abhängigkeit von T1, T2, G1, G2, R1, R2 oder in Abhängigkeit von T1, T2, G1R1, G2R2 für die algebraischen Abweichungen PAG1R1 vom Abstand G1R1 und PAG2R2 vom Abstand G2R2 berechnet wird,
- die absolute Genauigkeit PAVA und/oder die relative Genauigkeit PRVA, die in Prozent ausgedrückt wird, wie zum Beispiel PRVA=100xPAVA/VA ist, in Abhängigkeit von den Betriebsbedingungen und/oder in Abhängigkeit von den aerodynamischen und/oder mechanischen Beanspruchungen, denen das Flugzeug (1) ausgesetzt ist, für die erhaltenen Werte der algebraischen Abweichung PAG1R1 des Abstands G1R1 und der algebraischen Abweichung PAG2R2 des Abstands G2R2 berechnet wird.

## Claims

1. Device for measuring with great precision, in real time, the airspeed VA of an aircraft (1) relative to an ambient air mass MA surrounding said aircraft and taking into account the operational and/or atmospheric conditions, said ambient air mass MA having a direction of movement with respect to the aircraft represented by a vector W going from upstream to downstream, said aircraft (1) being capable of maneuvering in a subsonic and/or transonic and/or supersonic speed range, and having at least one fuselage (2), at least one boundary layer CL surrounding said aircraft which has a thickness defined by an angle ALFA, said angle ALFA being defined between the outer surface of the aircraft (1) and a surface where the flow is close to the flow relative to the infinite upstream, said aircraft (1) comprising a weakly elastic structure capable of slightly deforming according to operational and/or atmospheric conditions such as for example according to aerodynamic and/or mechanical and/or thermal stresses undergone by said aircraft, said aircraft (1) being capable of generating a noise B during its movement and/or its operation in the ambient air mass MA, said aircraft (1) having a longitudinal axis OX, a lateral axis OY, a vertical axis OZ, constituting an orthonormal reference frame OXYZ, and comprising:
- at least two acoustic wave generators GA1 and GA2, each capable of emitting at least one acoustic wave train, said generators GA1 and GA2 being fixed to the structure of said aircraft (1) at a position G1 and G2, respectively, in the reference frame OXYZ following the slight deformations of said structure of said aircraft (1), and
- at least two acoustic wave receivers RA1 and RA2, each capable of receiving at least one wave train emitted by the acoustic wave generators GA1 and/or GA2, said receivers RA1 and RA2 being fixed to the structure of said aircraft (1) at a position R1 and R2, respectively, in the reference frame OXYZ following the slight deformations of said structure of said aircraft (1), the receiver RA1 being located at a distance D1 from the generator GA1 on the axis OX and at a distance H1 from the generator GA1 on the axis OZ, and the receiver RA2 being located at a distance D2 from the generator GA2 on the axis OX and at a distance H2 from the generator GA2 on the axis OZ, said receivers RA1 and RA2 also being located downstream of the generators GA1 and GA2, respectively, **characterized in that** said device comprises:
- at least one means MC for actively and automatically measuring and calculating, in real time, the airspeed VA with absolute precision PAVA and relative precision PRVA expressed in percent such that PRVA = 100xPAVANA, said means MC comprising simultaneously:
∘ at least one means MC1 for measuring the travel time T1 of the wave train between the generator GA1 and the receiver RA1 and the travel time T2 of the wave train between the generator GA2 and the receiver RA2, following the slight deformations of the structure of the aircraft (1), and
∘ at least one means MC2 for measuring and/or calculating the positions G1, G2, R1, R2 and the distances G1R1 and G2R2 corresponding to the distance between the generator G1 and the receiver R1 and to the distance between the generator G2 and the receiver R2, respectively, following the slight deformations of the structure of the aircraft (1), and
∘ at least one means MC3 for calculating the airspeed VA and the speed of sound VS as a function of T1, T2, G1, G2, R1, R2 or as a function of T1, T2, G1R1, G2R2, following the slight deformations of the structure of the aircraft (1),
- and at least one means ME for actively and automatically measuring and/or calculating a correction of the value of the airspeed VA and optionally the value of the speed of sound VS by improving the absolute precision PAVA and/or the relative precision PRVA expressed in percent such that PRVA = 100xPAVANA, as a function of the operational conditions such as noise and/or aerodynamic and/or mechanical and/or thermal stresses undergone by said aircraft (1),
said means MC and ME also being correlated so that each value of T1, T2, G1, G2, R1, R2 and/or T1, T2, G1R1, G2R2 measured corresponds to one and only one value of VA, PAVA and PRVA.

2. Measuring device according to claim 1, **characterized in that** it further comprises at least one electromagnetic wave generator GE capable of emitting an electromagnetic wave train, said wave train having a frequency suitable for aviation regulations and the required performance, said frequency being between 1 GHz and 20 GHz preferably, and at least one electromagnetic wave receiver RE capable of receiving said electromagnetic wave train emitted by said generator GE, said generator GE and receiver RE being fixed to the structure of said aircraft at a position E1 and E2, respectively, following the slight deformations of the structure of said aircraft (1), said receiver RE being located at a distance GERE from the generator GE so as to measure the relative deformation of the structure of said aircraft (1) by measuring in real time the travel time of the electromagnetic wave, independently of the aircraft speed.

3. Measuring device according to either claim 1 or claim 2, **characterized in that** the means ME comprises at least one means ME1 for measuring and/or calculating and regulating the power PA1 and PA2 of the wave trains emitted by said acoustic generators GA1 and GA2, respectively, said means ME1 further measuring the power PB of the noise B generated under the operational conditions and/or by the aerodynamic and/or mechanical and/or thermal stresses undergone by the aircraft (1) in the ambient air mass MA, said means ME1 further allowing active control of the power PA1 and/or PA2 as a function of the power PB of the noise B so that the PA1/PB ratio and/or PA2/PB ratio is always greater than a predetermined value Pd depending on the operational conditions and/or by the aerodynamic and/or mechanical and/or thermal stresses, preferably greater than 0.7 or 1.2.

4. Measuring device according to claim 3, **characterized in that** when the acoustic power PB of the noise B is less than a predetermined value PBm (PB < P Bm) depending on the operational conditions and/or by the aerodynamic and/or mechanical and/or thermal stresses, for example 60 decibels, for example when the aircraft is stationary, then the power emitted by the generator GA1 and/or the generator GA2 is less than or equal to a predetermined value PGm, for example 110 decibels, and when the power PB of the noise B is greater than the predetermined value PBm (PB > PBm) the acoustic power emitted by the generator GA1 and/or the generator GA2 is equal to a value greater than said predetermined value PGm, for example 160 decibels, and **characterized in that** the power PB of the noise B is measured at a place where the power received from the acoustic waves emitted by the generator GA1 and/or GA2 is low and/or the power of the noise B is measured at an instant when the power of the waves emitted by the generator GA1 and/or GA2 is low or zero.

5. Measuring device according to any of the preceding claims, **characterized in that** the means ME further comprises at least one means ME2 for measuring and calculating the frequency FA1 and FA2 and/or the impedance IA1 and IA2 of the acoustic wave trains emitted by the acoustic generators GA1 and GA2, respectively, and the frequency FB and/or the impedance IB of the noise B generated under the operational conditions and/or by the aerodynamic and/or mechanical stresses undergone by the aircraft (1) in the ambient air mass MA, said means ME2 also allowing active control of the frequency FA1 and/or FA2 as a function of the frequency FB of the noise B so that the FA1/FB ratio and/or FA2/FB ratio is always greater than a predetermined value Fd, and/or said means also allowing control of the impedance IA1 and/or IA2 as a function of the impedance IB of the noise B so that the IA1/IB ratio and/or IA2/IB ratio is always greater than a predetermined value Id.

6. Measuring device according to any of the preceding claims, **characterized in that** the means ME further comprises at least one means ME3 for measuring and calculating the algebraic deviations of the positions PAG1 and PAG2 of the generators GA1 and GA2, respectively, and/or the algebraic deviation of the positions PAR1 and PAR2 of the receivers RA1 and RA2, respectively, and/or the algebraic deviations PAG1R1 and PAG2R2 of the distances G1R1 and G2R2, respectively, as a function of the operational conditions and/or as a function of the aerodynamic and/or mechanical stresses undergone by said aircraft (1), and **characterized in that** the measuring and calculating means ME3 further calculates, from the speed VS of sound, using the tabulated correspondence laws relating the speed of sound and the ambient temperature, a temperature TA of the ambient air mass, then by using the expansion laws of the aircraft materials and geometry, the means ME3 calculates the deviations PAGIR1 of the distance G1R1 and PAG2R2 of the distance G2R2 as a function of the operational conditions and/or as a function of the aerodynamic and/or mechanical stresses undergone by said aircraft (1), **characterized in that** the means ME3 for measuring and calculating further calculates, from the airspeed VA and/or atmospheric pressure, an algebraic deviation PAP to take into account the elongation of the aircraft as a function of the drag forces applied to the rear parts of the aircraft in order to derive the algebraic deviations PAG1R1 of the distance G1R1 and PAG2R2 of the distance G2R2 as a function of the operational conditions and/or as a function of the aerodynamic and/or mechanical stresses undergone by said aircraft (1).

7. Measuring device according to any of the preceding claims, **characterized in that** said device further comprises a means ME4 for measuring and calculating the electromagnetic wave travel time TEM between the generator GE and the receiver RE and the distance GERE between the generator GE and the receiver RE following the slight deformations of the structure of the aircraft (1) so as to obtain the algebraic deviation PAGERE of the distance GERE, and to derive therefrom the algebraic correction PAG1R1 of the distance G1R1 and also to derive therefrom the algebraic correction PAG2R2 of the distance G2R2 as a function of the operational conditions and/or as a function of the aerodynamic and/or mechanical stresses undergone by said aircraft (1).

8. Measuring device according to any of the preceding claims, **characterized in that** the receivers RA1 and RA2 and/or the generators GA1 and GA2 have a surface area of at least 16 square millimeters so that structural deformations undergone by the aircraft, under the operational conditions and/or under the effects of the aerodynamic and/or mechanical stresses, are negligible and do not prevent the receivers RA1 and RA2 from receiving the wave trains emitted by the generator GA1 and/or GA2, and **characterized in that** at least one of the acoustic generators and/or at least one of the acoustic receivers is placed at a point where the deformation effects undergone by the aircraft are substantially negligible so as to measure and calculate with precision the distances separating the other acoustic generators from the other acoustic receivers, and/or measure with precision the positions of the other acoustic generators and/or the other acoustic receivers.

9. Measuring device according to any of the preceding claims, **characterized in that** it comprises at least two electromagnetic wave generators GE1 and GE2 fixed to the structure of said aircraft at a position E11 and E12 close to the generators GA1 and GA2, respectively, in particular E11 coinciding with G1 and/or E12 coinciding with G2, and/or at least two electromagnetic wave receivers RE1 and RE2 fixed to the structure of said aircraft at a position E21 and E22 close to the receivers RA1 and RA2, respectively, in particular E21 coinciding with R1 and/or E22 coinciding with R2.

10. Measuring device according to any of the preceding claims, **characterized in that** it comprises an acoustic generator GA12 comprising at least two acoustic generators GA1, GA2 and/or an acoustic receiver RA12 comprising at least two acoustic receivers RA1, RA2.

11. Measuring device according to any of the preceding claims, **characterized in that** it comprises at least three acoustic wave generators and/or at least three acoustic wave receivers and optionally a means for measuring and calculating the anemometric incidence from the travel times of the acoustic waves so as to obtain a precise value of the incidence and better precision on the value of the speed VA at high incidence.

12. Method for operating the measuring device according to claims 1 to 4, wherein:
- at least two wave trains are emitted by the acoustic generator GA1 and GA2, respectively, in the direction of the receivers RA1 and RA2, respectively, the receiver RA1 receiving at least one wave emitted by GA1 and the receiver RA2 receiving at least one wave emitted by GA2,
- from the means MC1, the travel times of the wave trains T1 and T2 are measured,
- from the means MC2, the positions G1, G2, R1, R2 are measured, and the distances G1R1 and G2R2 are calculated,
- from the means MC3, the value of the airplane speed VA and the speed of sound VS are calculated, from the travel times and the positions or distances, as a function of T1, T2, G1, G2, R1, R2 and/or as a function of T1, T2, G1 R1, G2R2,
- from the means ME1, the value of the power PA1 and/or PA2 of the wave trains emitted by the acoustic generators and the power PB of the ambient noise B are measured and the PA1/PB ratio and/or PA2/PB ratio is calculated,
- the following checks are carried out:
∘ if the PA1/PB ratio and/or PA2/PB ratio is greater than the predetermined value Pd as a function of the operational conditions and/or as a function of the aerodynamic and/or mechanical stresses undergone by said aircraft (1) in the air mass MA, the value of the power PA1 and/or PA2 is kept constant,
∘ if the PA1/PB ratio and/or PA2/PB ratio is less than or equal to the Pd value, the value of the power PA1 and/or PA2 is substantially increased so as to obtain a PA1/PB ratio and/or PA2/PB ratio higher than Pd,
- the value of the airspeed VA and the speed of sound VS are corrected as a function of T1, T2, G1, G2, R1, R2 or as a function of T1, T2, G1R1, G2R2 for the power value PA1 and/or PA2,
- the absolute precision PAVA and/or the relative precision PRVA expressed in percent such that PRVA = 100xPAVANA is calculated, as a function of the operational conditions and/or as a function of the aerodynamic and/or mechanical stresses undergone by said aircraft (1) for the power value PA1 and/or PA2.

13. Method according to claim 12 for operating the measuring device according to claims 1 to 5, wherein:
- from the means ME2, the frequency FA1 and/or FA2 of the acoustic wave trains emitted by the acoustic generators and the frequency FB of the ambient noise B are measured, and the FA1/FB frequency ratio and/or FA2/FB frequency ratio is calculated,
- the following checks are carried out:
∘ if the FA1/FB ratio and/or FA2/FB ratio is greater than Fd, then the values of FA1 and/or FA2 are kept constant,
∘ if the FA1/FB ratio and/or FA2/FB ratio is less than or equal to Fd, the value of the frequency FA1 and/or FA2 is substantially increased so as to obtain a FA1/FB ratio and/or FA2/FB ratio greater than Fd,
- the new value of the airplane speed VA and the speed of sound VS are calculated as a function of T1, T2, G1, G2, R1, R2 or as a function of T1, T2, G1R1, G2R2 for the value of the frequency FA1 and/or FA2;
- the absolute precision PAVA and/or the relative precision PRVA expressed in percent such that PRVA = 100xPAVA/VA is calculated, as a function of the operational conditions and/or as a function of the aerodynamic and/or mechanical stresses undergone by said aircraft (1) for the value of the frequency FA1 and/or FA2.

14. Method according to either claim 12 or claim 13 for operating the measuring device according to claims 1 to 5, wherein:
- from the means ME2, the impedance IA1 and/or IA2 of the acoustic wave trains emitted by the acoustic generators and the impedance IB of the ambient noise B are measured, and the IA1/IB impedance ratio and/or IA2/IB impedance ratio is calculated,
- the following checks are carried out:
∘ if the IA1/IB ratio and/or IA2/IB ratio is greater than Id, then the values of IA1 and/or IA2 are kept constant,
∘ if the IA1/IB ratio and/or IA2/IB ratio is less than or equal to Id, the value of the frequency IA1 and/or IA2 is substantially increased so as to obtain a IA1/IB ratio and/or IA2/IB ratio greater than Id, respectively,
- the new value of the airplane speed VA and the speed of sound VS are calculated, as a function of T1, T2, G1, G2, RI, R2 and/or as a function of T1, T2, G1R1, G2R2 for the value of the frequency IA1 and/or IA2,
- the absolute precision PAVA and/or the relative precision PRVA expressed in percent such that PRVA = 100xPAVA/VA is calculated, as a function of the operational conditions and/or as a function of the aerodynamic and/or mechanical stresses undergone by said aircraft (1) for the value of the frequency IA1 and/or IA2.

15. Method according to claim 12 for operating the measuring device according to claims 1 to 4 and 6, wherein:
- the positions G1 and G2 of the generators GA1 and GA2 and/or the new positions R1 and R2 of the receivers RA1 and RA2 and/or the new distances G1R1 and G2R2 are measured, as a function of the operational conditions and/or as a function of the aerodynamic and/or mechanical stresses undergone by said aircraft (1),
- from the means ME3, the algebraic deviations PAG1 and PAG2 of the positions of the generators GA1 and GA2, respectively, and/or the algebraic deviations PAR1 and PAR2 of the positions of the receivers RA1 and RA2 and/or the algebraic deviations PAG1R1 and PAG2R2 of the distances G1R1 and G2R2, respectively, are calculated, as a function of the operational conditions and/or as a function of the aerodynamic and/or mechanical stresses undergone by said aircraft (1),
- the value of the airplane speed VA and the speed of sound VS are calculated as a function of T1, T2, G1, G2, R1, R2 or as a function of T1, T2, G1R1, G2R2 by integrating the corrections PAG1, PAG2 and/or PAR1, PAR2 of the positions G1, G2, R1, R2, respectively and/or the corrections PAG1R1, PAG2R2, of the distances G1R1, G2R2, respectively,
- the absolute precision PAVA and/or the relative precision PRVA expressed in percent such that PRVA = 100xPAVA/VA is calculated, as a function of the operational conditions and/or as a function of the aerodynamic and/or mechanical stresses undergone by said aircraft (1) for the values of PAG1, PAG2 and/or PAR1, PAR2 and/or PAG1R1, PAG2R2.

16. Method according to claim 12 for operating the measuring device according to claims 1 to 7, wherein:
- from the means ME4, for an operational condition and/or aerodynamic and/or mechanical stresses undergone by said aircraft (1) denoted CO1, the travel time TEM of the electromagnetic wave between the generator GE and the receiver RE is measured and the distance GERE is calculated,
- for an operational condition and/or aerodynamic and/or mechanical stresses undergone by said aircraft (1) denoted CO2, a new travel time TEM of the electromagnetic wave between the generator GE and the receiver RE is measured and the new distance NGERE is calculated,
- the new distance NGERE is compared with the distance GERE and the algebraic deviation PAGERE = NGERE - GERE of the distance between GE and RE is derived,
- the value of the airplane speed VA and the speed of sound VS are calculated as a function of T1, T2, G1, G2, R1, R2 and/or as a function of T1, T2, G1R1, G2R2 by integrating the correction PAGERE into the values of the distances G1R1, G2R2 for an operational condition and/or aerodynamic and/or mechanical stresses undergone by said aircraft (1) denoted CO2, an algebraic deviation PAG1R1 of the distance G1R1 and an algebraic deviation PAG2R2 of the distance G2R2 being derived,
- after a plurality of iterations, the precise values of VA, VS are obtained, as a function of the operational conditions and/or as a function of the aerodynamic and/or mechanical stresses undergone by said aircraft (1) CO2 for the value PAGERE obtained,
- from the speed VS of sound, a temperature TA of the ambient air mass and a deviation PATA of said temperature determined from a correlation between the speed of sound and the rules of correspondence between the speed of sound and the temperature are further calculated,
- the algebraic deviation PAG1R1 of the distance G1R1 and the algebraic deviation PAG2R2 of the distance G2R2 are derived as a function of the operational conditions and/or as a function of the aerodynamic and/or mechanical stresses undergone by said aircraft (1),
- the value of the airplane speed VA and the speed of sound VS are calculated as a function of T1, T2, G1, G2, R1, R2 or as a function of T1, T2, G1R1, G2R2 for the algebraic deviations PAG1R1 of the distance G1R1 and PAG2R2 of the distance G2R2,
- the absolute precision PAVA and/or the relative precision PRVA expressed in percent such that PRVA = 100xPAVA/VA is calculated, as a function of the operational conditions and/or as a function of the aerodynamic and/or mechanical stresses undergone by said aircraft (1) for the values of the algebraic deviation PAG1R1 of the distance G1R1 and the algebraic deviation PAG2R2 of the distance G2R2 obtained.
